(19) Europäisches Patentamt
European Patent Office
Office européen des brevets

(11) **EP 4 518 510 A1**

(12) **EUROPEAN PATENT APPLICATION**
published in accordance with Art. 153(4) EPC

(43) Date of publication:
**05.03.2025  Bulletin 2025/10**

(21) Application number: **23796817.7**

(22) Date of filing: **27.04.2023**

(51) International Patent Classification (IPC):
*H04W 72/12* (2023.01)          *H04W 72/231* (2023.01)
*H04L 1/18* (2023.01)

(52) Cooperative Patent Classification (CPC):
**H04L 1/18; H04W 72/12; H04W 72/231**

(86) International application number:
**PCT/KR2023/005740**

(87) International publication number:
**WO 2023/211175 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.04.2022   US 202263336217 P
28.04.2022   US 202263336224 P**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **KIM, Jaehyung**
  **Seoul 06772 (KR)**
• **BAE, Duckhyun**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING/RECEIVING CONFIGURED GRANT PUSCH IN WIRELESS COMMUNICATION SYSTEM**

(57)     A method and a device for transmitting/receiving a configured grant PUSCH in a wireless communication system are disclosed. The method according to one embodiment of the present disclosure may comprise the steps of: receiving, from a base station, individual configuration information related to at least one CG configuration; and transmitting, to the base station, the same TB through CG PUSCH transmission in a first CG PUSCH resource set and a second CG PUSCH resource set for the at least one CG configuration.

FIG.11

Receive respective configuration information related to one or more configured grant configurations — S1101

Receive downlink control information — S1102

Transmit configured grant PUSCH — S1103

EP 4 518 510 A1

**Description**

[Technical Field]

The present disclosure relates to a wireless communication system, and in more detail, relates to a method and an apparatus for transmitting and receiving a configured grant (CG) PUSCH (physical uplink shared channel) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving a CG PUSCH for multiple connected/associated CG configurations.

In addition, an additional technical object of the present disclosure is to provide a method and an apparatus for transmitting and receiving a CG PUSCH using a multi transmission reception point (M-TRP) for one or more CG configurations.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, respective configuration information related to one or more configured grant (CG) configurations; and transmitting, to the base station, the same transport block (TB) through transmission of CG PUSCHs (physical uplink shared channel) in a first CG PUSCH resource set and a second CG PUSCH resource set for the one or more CG configurations. Different transmission configuration indication (TCI) states may be configured for the first CG PUSCH resource set and the second CG PUSCH resource set, and uplink transmission spatial filters for the CG PUSCHs in the first CG PUSCH resource set and the second CG PUSCH resource set may be individually determined based on the different TCI states.

A method performed by a base station in a wireless communication system according to an additional aspect of the present disclosure may include: transmitting, to a user equipment (UE), respective configuration information related to one or more configured grant (CG) configurations; and receiving, from the UE, the same transport block (TB) through transmission of CG PUSCHs (physical uplink shared channel) in a first CG PUSCH resource set and a second CG PUSCH resource set for the one or more CG configurations. Different transmission configuration indication (TCI) states may be configured for the first CG PUSCH resource set and the second CG PUSCH resource set, and uplink transmission spatial filters for the CG PUSCHs in the first CG PUSCH resource set and the second CG PUSCH resource set may be individually determined based on the different TCI states.

[Technical Effects]

According to an embodiment of the present disclosure, CG PUSCHs for multiple connected/associated CG configurations can be transmitted and received.

In addition, according to an embodiment of the present disclosure, CG PUSCHs using M-TRP can be transmitted and received based on one or more CG configurations.

In addition, according to an embodiment of the present disclosure, CG resources can be efficiently operated to support XR (extended reality) operation.

In addition, according to an embodiment of the present disclosure, reliable transmission for important XR traffic is possible.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a multi-TRP transmission scheme in a wireless communication system to which the present disclosure can be applied.

FIG. 8 illustrates a structure/pattern of a group of pictures.

FIG. 9 illustrates a plurality of configured grant configurations according to an embodiment of the present disclosure.

FIG. 10 illustrates a signaling procedure between a network and a UE for a configured grant PUSCH transmission/-reception method according to an embodiment of the present disclosure.

FIG. 11 is a diagram illustrating an operation of a UE for a configured grant PUSCH transmission/reception method according to an embodiment of the present disclosure.

FIG. 12 is a diagram illustrating an operation of a base station for a configured grant PUSCH transmission/reception method according to an embodiment of the present disclosure.

FIG. 13 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone (UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal

- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

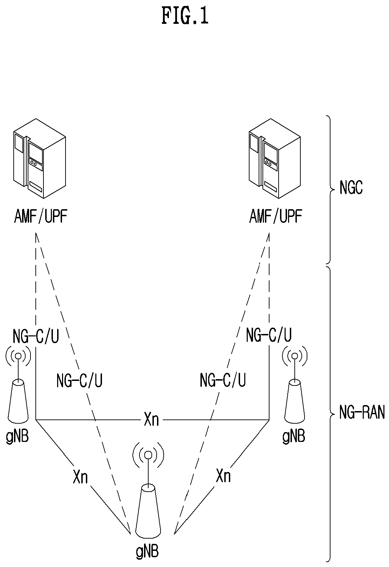

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

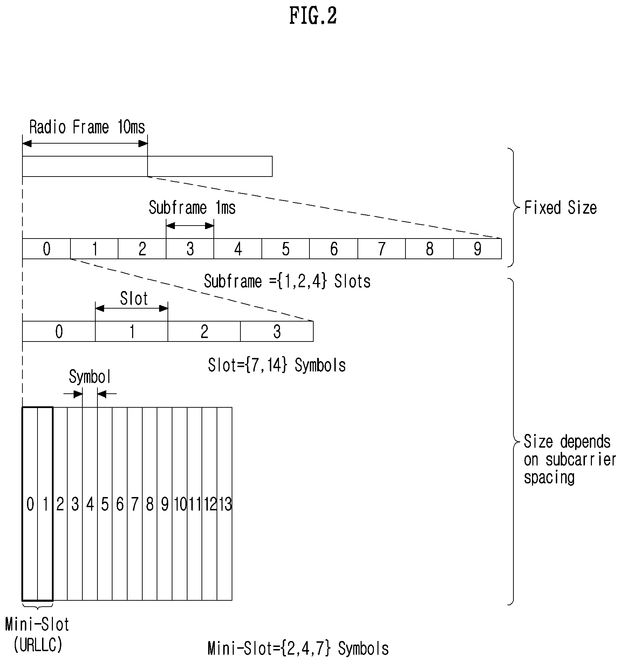

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu} - 1\}$ in a subframe and are numbered in an increasing order of $n_{s,f}^\mu \in \{0, ..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

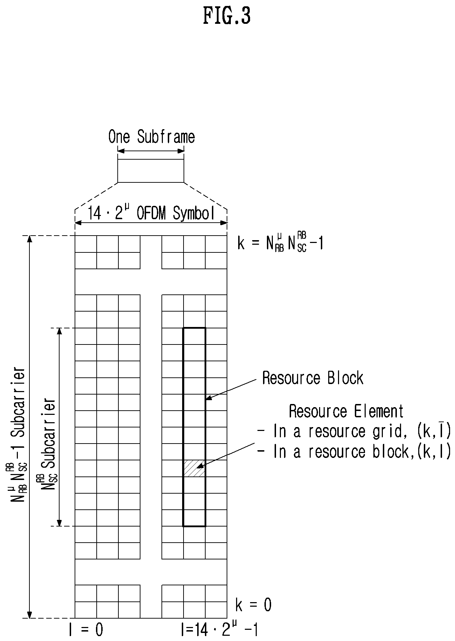

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

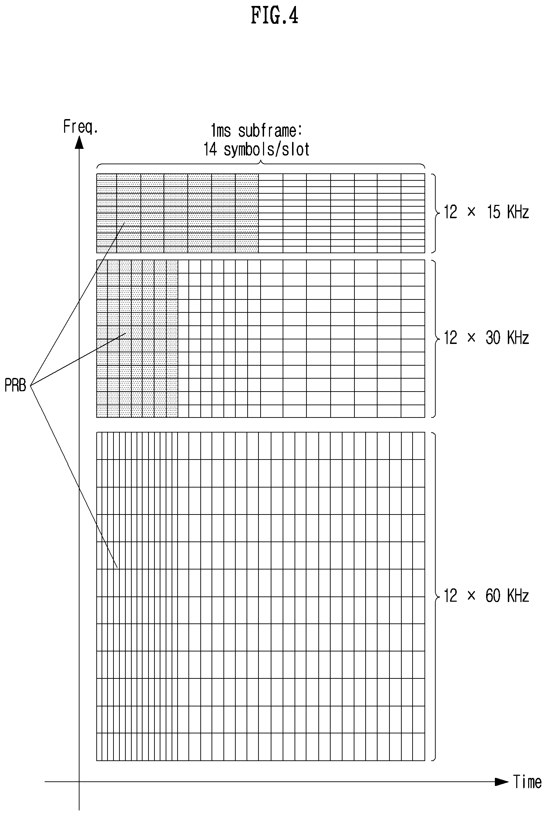

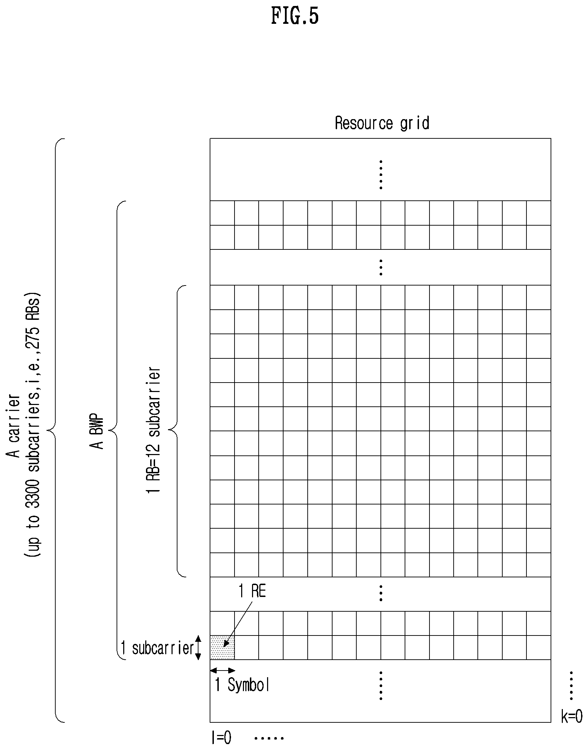

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

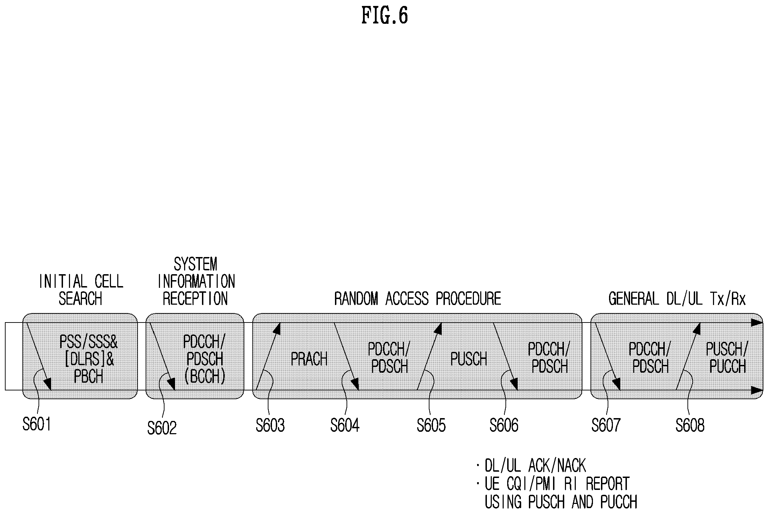

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB)(e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL (quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission (JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/-PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

Hereinafter, a method for improving reliability in Multi-TRP will be described.

As a transmission and reception method for improving reliability using transmission in a plurality of TRPs, the following two methods may be considered.

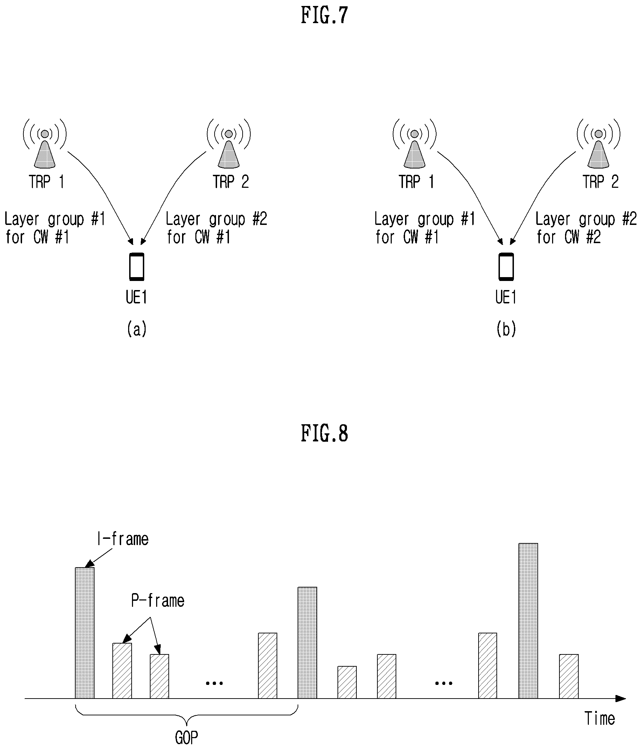

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Multi-TRP scheduled by at least one DCI may be performed as follows:

i) Scheme 1 (SDM): n (n is a natural number) TCI states in a single slot in overlapping time and frequency resource allocation

- Scheme 1a: Each transmission occasion is one layer or set of layers of the same TB, and each layer or set of layers is associated with one TCI and one set of DMRS port(s). A single codeword with one redundancy version (RV) is used for all layers or sets of layers. For a UE, different coded bits are mapped to different layers or sets of layers with specific mapping rules.

- Scheme 1b: Each transmission occasion is one layer or set of layers of the same TB, and each layer or set of layers is associated with one TCI and one set of DMRS port(s). A single codeword with one RV is used for each spatial layer or set of layers. RVs corresponding to each spatial layer or set of layers may be the same or different.
- Scheme 1c: Each transmission occasion is one layer of the same TB having one DMRS port associated with multiple TCI state indices or one layer of the same TB with multiple DMRS ports associated with multiple TCI indices in turn (one by one).

In schemes 1a and 1c described above, the same MCS is applied to all layers or sets of layers.

ii) Scheme 2 (FDM): n (n is a natural number) TCI states in a single slot in non-overlapping frequency resource allocation. Each non-overlapping frequency resource allocation is associated with one TCI state. The same single/multiple DMRS port(s) is associated with all non-overlapping frequency resource allocations.

- Scheme 2a: A single codeword with one RV is used across an entire resource allocation. For UE, a common RB mapping (mapping of codeword to layer) is applied across all resource allocations.
- Scheme 2b: A single codeword with one RV is used for each non-overlapping frequency resource allocation. RVs corresponding to each non-overlapping frequency resource allocation may be the same or different.

In scheme 2a, the same MCS is applied to all non-overlapping frequency resource allocations.

iii) Scheme 3 (TDM): n (n is a natural number) TCI states in a single slot in non-overlapping time resource allocation. Each transmission occasion of a TB has one TCI and one RV with time granularity of a mini-slot. All transmission occasion(s) in a slot use a common MCS with the same single or multiple DMRS port(s). An RV/TCI state may be the same or different among transmission occasions.

iv) Scheme 4 (TDM): n (n is a natural number) TCI states in K (n<=K, K is a natural number) different slots. Each transmission occasion of a TB has one TCI and one RV. All transmission occasion (s) across K slots use a common MCS with the same single or multiple DMRS port(s). An RV / TCI state may be the same or different among transmission occasions.

Hereinafter, in the present disclosure, DL MTRP-URLLC means that M-TRPs transmit the same data(e.g., transport block, TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is indicated which QCL RS/type (i.e., a DL TCI (state)) should be used in a layer/time/frequency resource receiving the same data/DCI from a base station. For example, when the same data/DCI is received in resource 1 and resource 2, a DL TCI state used in resource 1 and a DL TCI state used in resource 2 may be indicated. UE may achieve high reliability because it receives the same data/DCI through resource 1 and resource 2. Such DL MTRP URLLC may be applied to a PDSCH/a PDCCH.

Conversely, UL MTRP-URLLC means that M-TRPs receive the same data/UCI from UE by using a different layer/time/frequency resource. For example, TRP 1 receives the same data/UCI from UE in resource 1 and TRP 2 receives the same data/UCI from UE in resource 2 and shares received data/UCI through a backhaul link connected between TRPs. UE configured with a UL MTRP-URLLC transmission method transmits the same data/UCI by using a different layer/time/frequency resource. Here, UE is indicated which Tx beam and which Tx power (i.e., a UL TCI state) should be used in a layer/time/frequency resource transmitting the same data/DCI from a base station. For example, when the same data/UCI is received in resource 1 and resource 2, a UL TCI state used in resource 1 and a UL TCI state used in resource 2 may be indicated. Such UL MTRP URLLC may be applied to a PUSCH/a PUCCH.

In addition, in methods proposed in the present disclosure, when a specific TCI state (or a TCI) is used (/mapped) in receiving data/DCI/UCI for any frequency/time/space resource, it may mean that a DL estimates a channel from a DMRS by using a QCL type and a QCL RS indicated by a corresponding TCI state in that frequency/time/space resource and receives/demodulates data/DCI to an estimated channel. It may mean that an UL transmits/modulates a DMRS and data/UCI by using a Tx beam and/or Tw power indicated by a corresponding TCI state in that frequency/time/space resource.

The UL TCI state has Tx beam and/or Tx power information of UE and spatial relation information, etc. instead of a TCI state may be configured to UE through other parameter. An UL TCI state may be directly indicated to UL grant DCI or may mean spatial relation information of an SRS resource indicated by an SRI (SRS resource indicator) field of UL grant DCI. Alternatively, it may mean an OL (open loop) Tx power control parameter connected to a value indicated by a SRI field of UL grant DCI (j: an index for open loop parameter Po and alpha($\alpha$) (up to 32 parameter value sets per cell), q_d: an index of a DL RS resource for PL (pathloss) measurement (measurement of up to 3 per cell), l: a closed loop power control process index (up to 2 processes per cell)).

On the other hand, it is assumed that MTRP-eMBB means that M-TRPs transmit other data by using a different layer/time/frequency, UE configured with a MTRP-eMBB transmission method is indicated multiple TCI states with DCI and data received by using a QCL RS of each TCI state is different data.

In addition, whether of MTRP URLLC transmission/reception or MTRP eMBB transmission/reception may be understood by UE by separately classifying a RNTI for MTRP-URLLC and a RNTI for MTRP-eMBB and using them. In other words, when CRC masking of DCI is performed by using a RNTI for URLLC, it is considered as URLLC transmission and when CRC masking of DCI is performed by using a RNTI for eMBB, it is considered as eMBB transmission. Alternatively, a base station may configure MTRP URLLC transmission/reception or may configure MTRP eMBB transmission/reception to UE through other new signaling.

In the present disclosure, for convenience of a description, a proposal is applied by assuming cooperative transmission/reception between 2 TRPs, but it may be extended and applied in 3 or more multi-TRP environments and it may be also extended and applied in multi-panel environments. A different TRP may be recognized by UE as a different transmission configuration indication (TCI) state. That is, when UE receives/transmits data/DCI/UCI by using TCI state 1, it means that data/DCI/UCI is received/transmitted from/to TRP 1.

A proposal of the present disclosure may be utilized in a situation where MTRP cooperatively transmits a PDCCH (the same PDCCH is repetitively or partitively transmitted) and some proposals may be utilized even in a situation where MTRP cooperatively transmits a PDSCH or cooperatively receives a PUSCH/a PUCCH.

In addition, in the present disclosure below, the meaning that a plurality of base stations (i.e., MTRP) repetitively transmits the same PDCCH may mean the same DCI is transmitted by a plurality of PDCCH candidates, and it is equivalent with the meaning that a plurality of base stations repetitively transmits the same DCI. The same DCI may mean two DCI with the same DCI format/size/payload. Alternatively, although two DCI have a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception time of DCI. Here, if DCI received at a time of n and DCI received at a time of n+1 represent the same scheduling result to UE, a TDRA field of two DCI is different, and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure below, when a plurality of base stations (i.e., MTRP) divide and transmit the same PDCCH, it may mean that one DCI is transmitted through one PDCCH candidate, but TRP 1 transmits some resources in which the PDCCH candidate is defined and TRP 2 transmits the remaining resources. For example, when TRP 1 and TRP 2 divide and transmit a PDCCH candidate corresponding to an aggregation level m1 + m2, the PDCCH candidate is divided into PDCCH candidate 1 corresponding to aggregation level m1 and PDCCH candidate 2 corresponding to aggregation level m2, and TRP 1 transmits the PDCCH candidate 1 and TRP 2 transmits the PDCCH candidate 2 using different time/frequency resources. After receiving the PDCCH candidate 1 and the PDCCH candidate 2, a UE generates a PDCCH candidate corresponding to aggregation level m1+m2 and attempts DCI decoding.

When the same DCI is divided and transmitted to several PDCCH candidates, there may be two implementation methods.

First, a DCI payload (control information bits + CRC) may be encoded through one channel encoder (e.g., a polar encoder), coded bits obtained as a result may be divided into two TRPs and transmitted. In this case, an entire DCI payload may be encoded in coded bits transmitted by each TRP, or only a part of a DCI payload may be encoded. Second, a DCI payload (control information bits + CRC) may be divided into two (DCI 1 and DCI 2) and each can be encoded through a channel encoder (e.g., polar encoder). Thereafter, two TRPs may transmit coded bits corresponding to DCI 1 and coded bits corresponding to DCI 2, respectively.

In summary, it may be as follows that a plurality of base stations (i.e., MTRP) divide/repeat the same PDCCH and transmit over a plurality of monitoring occasions (MO).

i) it may mean that each base station (i.e., STRP) repeatedly transmits coded DCI bits obtained by encoding all DCI contents of a corresponding PDCCH through each MO; or,

ii) it may mean that coded DCI bits obtained by encoding all DCI contents of a corresponding PDCCH are divided into a plurality of parts, and each base station (i.e., STRP) transmits a different part through each MO; or

iii) it may mean that DCI contents of a corresponding PDCCH are divided into a plurality of parts, and each base station (i.e., STRP) separately encodes different parts and transmits them through each MO.

That is, it may be understood that a PDCCH is transmitted multiple times over several transmission occasions (TO) regardless of repeated transmission or divided transmission of the PDCCH. Here, a TO means a specific time/frequency resource unit in which a PDCCH is transmitted. For example, if a PDCCH is transmitted multiple times (in a specific resource block (RB)) over slots 1, 2, 3, and 4, a TO may mean each slot, or if a PDCCH is transmitted multiple times (in a specific slot) over RB sets 1, 2, 3, and 4, a TO may mean each RB set, or if a PDCCH is transmitted multiple times over different times and frequencies, a TO may mean each time/frequency resource. In addition, a TCI state used for DMRS channel estimation for each TO may be configured differently, and it may be assumed that TOs in which a TCI state is configured differently are transmitted by different TRPs/panels. When a plurality of base stations repeatedly transmits or dividedly transmits a PDCCH, it means that the PDCCH is transmitted over a plurality of TOs, and the union of TCI states configured in corresponding TOs is configured with two or more TCI states. For example, if a PDCCH is transmitted over TOs 1,2,3,4, TCI states 1,2,3,4 may be configured in each of TOs 1,2,3,4, respectively, which means that TRP i transmits cooperatively a PDCCH in TO i.

For a plurality of TOs indicated to a UE to repeatedly transmit or dividedly transmit a PDCCH/PDSCH/PUSCH/PUCCH, UL transmits to a specific TRP or DL receives from a specific TRP in each TO. Here, a UL TO (or TO of TRP 1) transmitted to TRP 1 means a TO using the first value among two spatial relations, two UL TCIs, two UL power control parameters and/or two pathloss reference signals (PLRS) indicated to a UE, and a UL TO (or TO of TRP 2) transmitted to TRP 2 means a TO using the second value among two spatial relations, two UL TCIs, two UL power control parameters and/or two PLRSs indicated to a UE. Similarly, for DL transmission, a DL TO (or TO of TRP 1) transmitted by TRP 1 means a TO using the first value among two DL TCI states (e.g., when two TCI states are configured in CORESET) indicated to a UE, and a DL TO (or TO of TRP 2) transmitted by TRP 2 means a TO using the second value among two DL TCI states (e.g., when two TCI states are configured in CORESET) indicated to a UE.

The proposal of the present disclosure can be extended and applied to various channels such as PUSCH/PUCCH/PDSCH/PDCCH.

The proposal of the present disclosure can be extended and applied to both a case of repeated transmission and a case of divided transmission the channel on different time/frequency/spatial resources.

Configured grant for uplink

Configured grant (CG) for a PUSCH is divided into CG Type 1 and CG Type 2.

CG Type 1 is completely configured or released for resource allocation by using RRC signaling. When CG Type 1 is configured, a UE is allocated a set of resources that can periodically transmit a PUSCH. A PDCCH is requested only when retransmission is required. CG Type 1 PUSCH transmission is semi-statically configured to operate when receiving the higher layer parameter configuredGrantConfig including rrc-ConfiguredUplinkGrant without detecting UL grant in DCI. A UE can perform PUSCH transmission according to the configured CG Type 1 until additional RRC signaling is re-established for the UE.

CG Type 2 is partially configured with resource allocation using RRC signaling, and is activated/deactivated using PDCCH transmission. Since a PDCCH also provides time and frequency resource allocation, the resource allocation may vary each time it is activated. CG Type 2 PUSCH transmission is semi-persistently scheduled by UL grant in a valid activation DCI after reception of the higher layer parameter configuredGrantConfig, which does not include rrc-ConfiguredUplinkGrant.

One or more CG configurations of CG Type 1 and/or CG Type 2 may be activated simultaneously on an activated BWP of a serving cell.

For PUSCH transmission corresponding to CG Type 1 or CG Type 2, parameters for PUSCH transmission can be provided by configuredGrantConfig.

Table 6 shows an example of configuredGrantConfig IE. configuredGrantConfig IE is used to configure uplink transmission without dynamic grant by DCI. The actual uplink grant can be configured by RRC (CG Type 1) or provided via PDCCH (by CS-RNTI) (CG Type 2). Multiple CG configurations can be configured within one BWP of a serving cell.

【Table 6】

```
-- ASN1START
-- TAG-CONFIGUREDGRANTCONFIG-START

ConfiguredGrantConfig ::=          SEQUENCE {
    frequencyHopping                   ENUMERATED {intraSlot, interSlot}
OPTIONAL,   -- Need S
    cg-DMRS-Configuration              DMRS-UplinkConfig,
    mcs-Table                          ENUMERATED {qam256, qam64LowSE}
OPTIONAL,   -- Need S
    mcs-TableTransformPrecoder         ENUMERATED {qam256, qam64LowSE}
OPTIONAL,   -- Need S
    uci-OnPUSCH                        SetupRelease { CG-UCI-OnPUSCH }
OPTIONAL,   -- Need M
    resourceAllocation                 ENUMERATED { resourceAllocationType0,
resourceAllocationType1, dynamicSwitch },
    rbg-Size                           ENUMERATED {config2}
OPTIONAL,   -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,   -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}
OPTIONAL,   -- Need R
    periodicity                        ENUMERATED {
                                       sym2, sym7, sym1x14, sym2x14, sym4x14,
sym5x14, sym8x14, sym10x14, sym16x14, sym20x14,
                                       sym32x14, sym40x14, sym64x14, sym80x14,
sym128x14, sym160x14, sym256x14, sym320x14, sym512x14,
                                       sym640x14, sym1024x14, sym1280x14,
sym2560x14, sym5120x14,
                                       sym6, sym1x12, sym2x12, sym4x12, sym5x12,
sym8x12, sym10x12, sym16x12, sym20x12, sym32x12,
                                       sym40x12, sym64x12, sym80x12, sym128x12,
sym160x12, sym256x12, sym320x12, sym512x12, sym640x12,
                                       sym1280x12, sym2560x12
    },
    configuredGrantTimer               INTEGER (1..64)
OPTIONAL,   -- Need R
    rrc-ConfiguredUplinkGrant          SEQUENCE {
        timeDomainOffset                   INTEGER (0..5119),
        timeDomainAllocation               INTEGER (0..15),
        frequencyDomainAllocation          BIT STRING (SIZE(18)),
        antennaPort                        INTEGER (0..31),
        dmrs-SeqInitialization             INTEGER (0..1)
OPTIONAL,   -- Need R
        precodingAndNumberOfLayers         INTEGER (0..63),
        srs-ResourceIndicator              INTEGER (0..15)
OPTIONAL,   -- Need R
        mcsAndTBS                          INTEGER (0..31),
        frequencyHoppingOffset             INTEGER (1.. maxNrofPhysicalResourceBlocks-1)
OPTIONAL,   -- Need R
        pathlossReferenceIndex             INTEGER (0..maxNrofPUSCH-
PathlossReferenceRSs-1),
        ...,
        [[
        pusch-RepTypeIndicator-r16         ENUMERATED {pusch-RepTypeA,pusch-RepTypeB}
OPTIONAL,   -- Need M
        frequencyHoppingPUSCH-RepTypeB-r16  ENUMERATED {interRepetition, interSlot}
OPTIONAL,   -- Cond RepTypeB
        timeReferenceSFN-r16               ENUMERATED {sfn512}
OPTIONAL    -- Need S
        ]]
    }
OPTIONAL,   -- Need R
    ...,
```

In Table 6, periodicity represents a period for uplink CG transmission, which means a time duration between consecutive continuous resource allocations. periodicityExt is used to calculate a period of uplink CG, and if this parameter does not exist, periodicity is ignored. An uplink CG period has different supported values depending on the configured subcarrier spacing.

nrofHARQ-Processes indicates the number of HARQ processes configured for the uplink CG. In case of dynamic resource allocation, a HARQ process identifier is specified in DCI associated with each resource allocation. However, in the uplink CG, an identifier of a HARQ process is determined based on the nrofHARQ-Processes value and the periodicity value.

repK indicates the number of repetitions, i.e., indicates the repetition level for each PUSCH transmission. repK can have one of {1,2,4,8} values. For CG Type 1, if pusch-RepTypeIndicator in rrc-ConfiguredUplinkGrant indicates 'pusch-RepTypeB', PUSCH repetition type B is applied, otherwise PUSCH repetition type A is applied. For CG Type 2, a PUSCH repetition type is determined by UL grant of DCI. A UE transmits an uplink TB repeatedly for the configured number of repetitions, depending on the configured PUSCH repetition type A or B.

repK-RV indicates the redundancy version sequence. repK-RV is configured when repetition is used (i.e., when repK is set to one of {2,4,8}).

resourceAllocation indicates a configuration of bitmap-based resource allocation type 0 or resource indication value (RIV)-based resource allocation type 1.

mcs-Table indicates an MCS table used by a UE for a PUSCH where transform precoding is not used, and mcs-TableTransformPrecoder indicates an MCS table used by a UE for a PUSCH where transform precoding is used. transformPrecoder indicates whether transform precoding is enabled for a PUSCH.

rrc-ConfiguredUplinkGrant is a configuration for CG Type 1 transmission. If this field does not exist, a UE uses UL grant configured by DCI by a CS-RNTI (i.e., CG Type 2). timeDomainAllocation indicates a start symbol and a length of a PUSCH and a PUSCH mapping type. timeDomainOffset indicates an offset related to a reference SFN (system frame number) indicated by timeReferenceSFN. timeReferenceSFN indicates an SFN used to determine an offset of resources in a time domain. A UE uses an SFN closest to the indicated number before reception of the configured grant configuration, and if this field does not exist, the reference SFN is 0.

After uplink grant is configured for CG Type 1, a MAC entity sequentially considers that the Nth (N≥0) uplink grant occurs within a symbol according to Equation 3 below. That is, when CG Type 1 is used, a CG PUSCH can be transmitted at a transmission occasion/opportunity satisfying Equation 3 below.

$$[(\text{SFN} \times \textit{numberOfSlotsPerFrame} \times \textit{numberOfSymbolsPerSlot}) + (\text{slot number in the frame} \times \textit{numberOfSymbolsPerSlot}) + \text{symbol number in the slot}] = (\textit{timeReferenceSFN} \times \textit{numberOfSlotsPerFrame} \times \textit{numberOfSymbolsPerSlot} + \textit{timeDomainOffset} \times \textit{numberOfSymbolsPerSlot} + \text{S} + \text{N} \times \textit{periodicity}) \text{ modulo } (1024 \times \textit{numberOfSlotsPerFrame} \times \textit{numberOfSymbolsPerSlot}) \qquad \text{[Equation 3]}$$

In addition, after uplink grant is configured for CG Type 2, a MAC entity sequentially considers that the Nth (N≥0) uplink grant occurs within a symbol according to Equation 4 below. That is, when CG Type 2 is used, a CG PUSCH can be transmitted at a transmission occasion/opportunity satisfying Equation 4 below.

$$\text{--> } [(\text{SFN} \times \textit{numberOfSlotsPerFrame} \times \textit{numberOfSymbolsPerSlot}) + (\text{slot number in the frame} \times \textit{numberOfSymbolsPerSlot}) + \text{symbol number in the slot}] = [(\text{SFN}_{\text{start time}} \times \textit{numberOfSlotsPerFrame} \times \textit{numberOfSymbolsPerSlot} + \text{slot}_{\text{start time}} \times \textit{numberOfSymbolsPerSlot} + \text{symbol}_{\text{start time}}) + \text{N} \times \textit{periodicity}] \text{ modulo } (1024 \times \textit{numberOfSlotsPerFrame} \times \textit{numberOfSymbolsPerSlot}) \qquad \text{[Equation 4]}$$

In Equations 3 and 4, numberOfSlotsPerFrame represents the number of consecutive slots per frame, and numberOfSymbolsPerSlot represents the number of consecutive symbols per slot.

In addition, timeReferenceSFN is used to determine an offset of resources in a time domain, and a UE may use an SFN closest to the indicated number before reception of the configured CG. timeDomainOffset represents an offset relative to a reference SFN indicated by timeReferenceSFN. periodicity represents a period of UL transmission for CG Type 1. timeReferenceSFN, timeDomainOffset, and periodicity can be configured by configuredGrantConfig (see Table 6). In addition, S corresponds to a start symbol deduced from timeDomainAllocation (see Table 6), and N is an integer value corresponding to the Nth transmission occasion/opportunity.

Additionally, SFN$_{\text{start time}}$, slot$_{\text{start time}}$, and symbol$_{\text{start time}}$ represent an SFN, a slot, and a symbol of the first transmission occasion/opportunity of a PUSCH (i.e., in a PUSCH transmission that occurs according to resource allocation in the active PDCCH) in which the CG is (re)initialized, respectively.

Meanwhile, in the case of dynamic resource allocation on a PDCCH, a HARQ process identity (HARQ process ID) is specified in DCI, whereas in the case of CG, DCI is not received before each PUSCH transmission, so a HARQ process is calculated according to Equation 5 or 6 below. A base station can configure the number of HARQ processes (e.g., nrofHARQ-Processes) and an offset used to derive a HARQ process ID (e.g., harq-ProcID-Offset2).

If an offset used to derive a HARQ process ID (e.g., harq-ProcID-Offset2) and a retransmission timer (cg-RetransmissionTimer) are not configured, a UE derives a HARQ process ID associated with a slot where uplink transmission starts from Equation 5 below. Alternatively, if an offset used to derive a HARQ process ID (e.g., harq-ProcID-Offset2) is configured, a UE derives a HARQ process ID associated with a slot where an uplink transmission starts from Equation 6 below.

【Equation 5】

$$\text{HARQ Process ID} = [\text{floor}(\text{CURRENT\_symbol}/periodicity)] \text{ modulo } nrofHARQ\text{-}Processes$$

【Equation 6】

$$\text{HARQ Process ID} = [\text{floor}(\text{CURRENT\_symbol} / periodicity)] \text{ modulo } nrofHARQ\text{-}Processes + harq\text{-}ProcID\text{-}Offset2$$

In Equations 5 and 6, nrofHARQ-Processes defines the number of uplink HARQ processes and can have values from 1 to 16 (see Table 6). nrofHARQ-Processes is used to identify a HARQ process ID for a specific PUSCH transmission.

In addition, in Equations 5 and 6, CURRENT_symbol = (SFN $\times$ numberOfSlotsPerFrame $\times$ numberOfSymbolsPerSlot + slot number in the frame $\times$ numberOfSymbolsPerSlot + symbol number in the slot). numberOfSlotsPerFrame and numberOfSymbolsPerSlot mean the number of consecutive slots per frame and the number of consecutive symbols per slot, respectively.

Meanwhile, in Table 6, configuredGrantTimer indicates an initial value of a CG timer as a multiple of the periodicity. That is, configuredGrantTimer defines a duration (period) for which a UE waits for a retransmission request after transmitting an uplink packet. A CG timer is independently operated for each HARQ process.

More specifically, a MAC entity includes an HARQ entity for each serving cell having a configured uplink, which maintains multiple parallel HARQ processes. The number of parallel HARQ processes per HARQ entity is determined according to the standard specification. Each HARQ process supports one TB. Each HARQ process is associated with one HARQ process identifier (ID). When one TB is repeated in multiple CG PUSCHs (i.e., in multiple CG PUSCH TOs), the same HARQ process can be used for the repeated CG PUSCHs.

For an uplink grant, a HARQ entity identifies a HARQ process associated with the grant. For an identified HARQ process, if the uplink grant is a configured uplink grant and is used for the initial transmission for the configured uplink grant, a HARQ entity may start a CG timer (i.e., configuredGrantTimer) by an initial CG PUSCH transmission for the identified HARQ process according to Equation 5 or Equation 6. Here, a CG timer (i.e., configuredGrantTimer) may be started at the start of the first symbol of the initial CG PUSCH transmission.

A UE can assume a positive acknowledgement when a CG timer expires. The UE assumes a positive acknowledgment if this timer expires (i.e., if no retransmission request is received until the timer expires). This allows a UE to subsequently transmit new uplink data using the same HARQ process.

This CG timer should be configured long enough to ensure that a base station has time to receive an uplink packet and schedule a retransmission request, but if this CG timer is configured too long, a delay may occur because a UE cannot reuse the HARQ process for a new transmission until it assumes a positive acknowledgment for the previous transmission.

Method for transmitting and receiving a PUSCH using configured grant (CG)

In the present disclosure, when video information of an extended reality (XR) service is transmitted using a resource configured in advance, such as a configured grant (CG) of an NR wireless communication system, a method is proposed to reduce power consumption and increase the efficiency of wireless resources while ensuring the availability and reliability of transmission resources.

In NR, one or more CG PUSCHs can be configured for a UE for periodic transmission and reception or for low latency and PDCCH overhead. Each CG configuration has a period and configured/indicated resources can be repeated. That is, the initially configured/indicated resource allocation is repeated with the configured period, and the UE can perform uplink transmission on the corresponding resources without a separate PDCCH reception process.

Meanwhile, types of data that can be generated in XR are diverse. Among these data, sensor and location information of a UE and video data transmissions that are generally reported with a specific cycle are being considered to be transmitted and received from CG resources. These data may not always have a fixed data generation time (traffic arrival time) and may have jitter due to reasons such as video encoding time, sensor measurement time, higher layer operation, or changes in routing of the transmitted network.

If resources are allocated to a location far enough away from the expected traffic occurrence time considering jitter, etc., resource availability can be guaranteed, but delays may occur. On the other hand, if CG resources with fixed cycles are allocated to the expected data occurrence time, a larger delay may occur due to the waiting time until the next available resource when jitter occurs.

In addition, since some data are generated based on events, it is impossible to accurately identify the actual data generation time, but the use of CG resources for such data is being considered to reduce the delay time caused by scheduling. In this case, skipping methods have been discussed in the past, in which sufficient resources are allocated in short cycles in preparation for the generation of data, and a UE or a base station selectively uses these resources and does not actually use other resources. However, in order to use the method of skipping transmission and reception, it is necessary to consider response signals between a UE and a base station to determine whether to receive and transmit. If a UE sends a response signal even for transmission that has not been received, a base station needs to always prepare resources for the UE to send the response signal. In addition, considering that the skipping method is based on setting sufficient resources in the radio resources, it can act as a large uplink burden. Also, considering that these resources can be multiplexed between UEs, the burden of uplink resources should be considered more importantly.

Since securing low latency is essential for the quality of XR service, it is necessary to consider a method to minimize the impact of latency while reducing the impact of jitter. In this disclosure, in order to solve this problem, a method is discussed to selectively use some of the multiple CG resources configured between a UE and a base station and to simplify and transmit the response to the used CG resources to a pre-determined location.

A group of pictures (GOP) of video coding may include the following picture types.

I picture or I frame (i.e., an intra-coded picture) (also referred to as a key frame or i-frame) is a picture that is encoded independently of all other pictures. Each GOP starts with a picture of this type (in decoding order).

P picture or P frame (i.e., a predictive coded picture) contains motion-compensated difference information relative to previously decoded pictures. For example, in previous designs such as H.262/MPEG-2 and H.263, each P picture can refer to only one picture, which must precede the P picture in display order and decoding order, and which must be an I or P picture. These constraints do not apply to the new standards H.264/MPEG-4 AVC and HEVC.

B-picture or B-frame (bipredictive coded pictures) contain motion-compensated difference information compared to previously decoded pictures. For example, in previous designs such as MPEG-1 and H.262/MPEG-2, each B-picture can only refer to two pictures, one that precedes the B-picture in display order and one that follows the B-picture, and all referenced pictures must be an I or P picture. This restriction does not apply to the new standards H.264/MPEG-4 AVC and HEVC.

D picture or D frame (direct coded (DC) picture) serves as a fast access representation of a picture for loss robustness or fast-forward. D pictures are used only in MPEG-1 video.

FIG. 8 illustrates a structure/pattern of a group of pictures.

Referring to FIG. 8, an I frame indicates a start of a GOP. It is followed by several P and B frames. In previous designs, the allowable ordering and reference structures are relatively limited.

The GOP structure is often referenced by two numbers, for example, M=3, N=12. The first number (M) indicates the distance between two anchor frames (I or P). The second number (N) is the GOP size, which indicates a distance between two full images (I-frames). For example, for M=3, N=12, the GOP structure is IBBPBBPBBPBBI. Instead of the M parameter, the maximum number of B frames between two consecutive anchor frames can also be used.

For example, in a sequence with a pattern IBBBBPBBBBPBBBBBI, the GOP size (N value) is 15 (a length between two I frames) and the distance between two anchor frames (M value) is 5 (the length between an I frame and a P frame or the length between two consecutive P frames).

I frame contains the full image and no additional information is needed to reconstruct it. Typically, encoders use a GOP structure that ensures that each I frame is a "clean random access point". Therefore, decoding can start cleanly from an I frame and any errors within the GOP structure are corrected after processing the correct I frame.

In the following disclosure, the proposed method is described based on the uplink CG radio resources that are configured semi-statically, but this is for the convenience of explanation, and the methods proposed in the present disclosure are not limited thereto. Therefore, it can be understood by those skilled in the art that the methods proposed in the present disclosure can be extended and applied to the radio resource allocated through dynamic scheduling received by the UE. For example, the method of determining one HARQ-ACK timing for multiple downlink radio resources allocated to a UE can be applied regardless of an SPS PDSCH and a PDSCH indicated by dynamic scheduling. In addition, when multiple wireless resources are not configured semi-statically but are configured through dynamic instructions, for example, when multiple wireless resources are configured at once through DCI, the methods proposed in this disclosure can be applied. Therefore, the methods proposed in this disclosure can be applied to all types of transmission and reception methods expected by a base station and a UE, as long as the principle of the proposed method is not violated, even without a separate explanation. Hereinafter, in this disclosure, for the convenience of explanation, semi-persistent scheduling (SPS) can be used as a general concept to collectively refer to wireless resources that are configured semi-statically (e.g., DL/UL SPS, CG).

In addition, in the present disclosure, a transmission occasion/opportunity (TO) means a radio resource configured for CG use (e.g., CG PUSCH). In a transmission occasion, a subject performing transmission (i.e., a base station in the case of downlink, a UE in the case of uplink) may attempt to transmit in a TO, and a receiver (i.e., a UE in the case of downlink, a base station in the case of uplink) may expect transmission in each TO and attempt to receive it.

Hereinafter, in order to explain the principle of the proposed method, the present disclosure provides an example based on the NR system, but the proposed methods do not specifically limit the transmission and reception form of NR unless otherwise specified. In addition, in order to explain the principle of the proposed method, the present disclosure provides an example based on the characteristics and structure of XR services, but the proposed methods do not specifically limit the support of XR services unless otherwise specified. Therefore, the methods proposed in this disclosure can be applied to all wireless communication transmission and reception structures and services as long as the principle of the proposed method is not violated even without a separate explanation.

Hereinafter, in the present disclosure, in preparation for the case where a GOP pattern and jitter occur, a method of configuring multiple CG configurations by connecting/linking them for multiple CG resources set between a UE and a base station and/or a method of activating/transmitting a second CG transmission according to the connected/associated first CG transmission is proposed. Through this, in preparation for the case where a GOP pattern and jitter occur, a method of configuring multiple CG configurations by connecting/linking them for multiple CG resources set between a UE and a base station and activating/transmitting a second CG transmission according to the connected/linked first CG transmission is proposed, thereby efficiently operating the CG resource.

In addition, the present disclosure proposes one or more CG configurations for multiple TRPs. Through this, important video frames such as I-frames among different video frames with different importance can be provided with a more reliable and differentiated transmission method. Through this, reliable transmission for important XR traffic such as i-frames is possible by proposing one or more CG configurations for multiple TRPs.

For this purpose, the method proposed in this disclosure may include a method in which a base station allocates CG radio resources to a UE, and a method in which CG resources are received and transmitted. In addition, the method proposed in this disclosure may include a method in which a HARQ-ACK response to a CG PUSCH reception result is transmitted, and a method in which retransmission DCI of a base station is received through a PDCCH. In addition, the method proposed in this disclosure may include a process in which a UE transmits a signal and channel to inform its capability and/or service requirements, and a base station receives the signal and channel.

The method proposed in this disclosure may be applied by selecting some of the following methods. In addition, each method proposed in this disclosure may operate independently without separate combination, or may operate in a linked form by combining one or more methods. Some terms, symbols, and orders used to describe the method proposed in this disclosure may be replaced with other terms, symbols, and orders as long as the principle of the invention is maintained.

The following CG settings and activation/deactivation, transmission/reception operations, etc. can be supported in the present disclosure. That is, the following CG settings and activation/deactivation, transmission/reception operations, etc. can be incorporated into the methods proposed in the present disclosure.

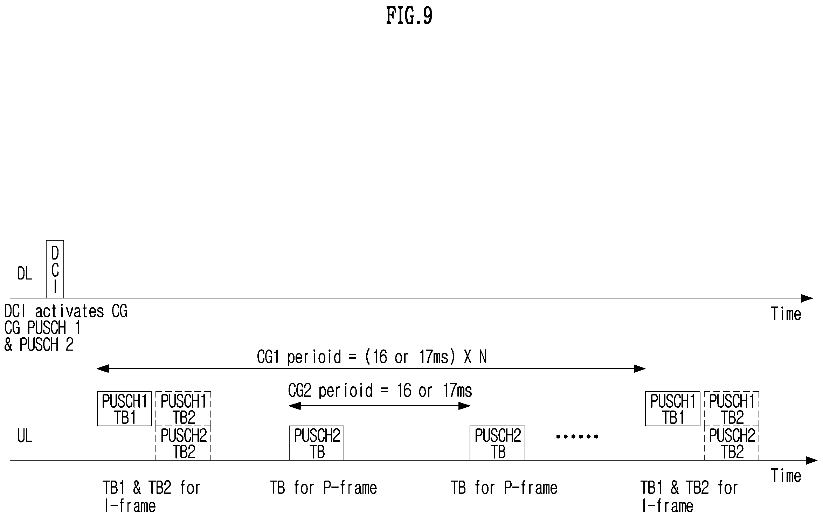

FIG. 9 illustrates a plurality of configured grant configurations according to an embodiment of the present disclosure.

- Multiple CGs (for example, CG1 and CG2 in the case of two CGs) can be configured as one CG group with a CG configuration that is linked/associated to each other, and CG1 can be configured as a primary CG and CG2 can be configured as a secondary CG. Here, the secondary CG can be a CG that is activated or received according to the transmission of the primary CG. For example, the CG configuration for CG PUSCH 1 in FIG. 9 is a primary CG configuration, and the CG configuration for CG PUSCH 2 is a secondary CG configuration, and the two CG configurations can be configured as one CG group.

- The primary CG and the secondary CG can be configured with different CG configuration indices. Alternatively, the primary CG and secondary CG may be configured with the same CG configuration index, but may be distinguished by a primary/secondary CG indicator or different sub-indexes through an RRC message or MAC CE or DCI.

   i) If DCI indicates CG1 and also indicates activation, a UE may activate CG2 simultaneously with CG1 or after a certain period of time.

   ii) Alternatively, if DCI indicates both CG1 and CG2 and also indicates activation, a UE may activate CG2 simultaneously with CG1 or after a certain period of time. For example, FIG. 9 illustrates a case where activation is indicated for both CG configuration for CG PUSCH 1 and CG configuration for CG PUSCH 2 by one DCI.

Here, the DCI may include different CG configuration indices for both CG1 and CG2.

Alternatively, the DCI may include a CG configuration index for CG1 and indicate a secondary CG indicator.

Alternatively, the DCI may include a CG configuration index for CG2 and indicate a primary CG indicator.

Alternatively, the DCI may include a CG configuration index for CG1 or CG2 and a sub-index for CG2 or CG1.

Alternatively, DCI may indicate a common CG configuration index for CG1 and CG2. For example, among HARQ process identifier (ID: identity) values indicating CG configuration indexes, a value between 1 and 8 may be configured as a conventional CG configuration index (i.e., for indicating a single CG configuration), and a HARQ process ID value exceeding 8 may be configured as a CG configuration index indicating multiple connected CGs simultaneously.

Alternatively, the DCI may include all different CG configuration sub-indexes for CG1 and CG2.

- A base station can configure different video frame types (e.g., I-frame and P-frame) to different logical channels. Accordingly, a UE can indicate that the data are for different video frames through a value of a logical channel identifier (LCID) field included in a sub-header of an uplink MAC protocol data unit (PDU) (i.e., transport block (TB)). Here, a base station can configure different logical channels for different video frame types to be mapped to different CGs. Here, CG1 and CG2 can be mapped to the same or different logical channels.

For example, referring to FIG. 9, different logical channels can be configured/allocated for I-frame and P-frame. In addition, a logical channel for I-frame can be mapped to CG for CG PUSCH 1, and a logical channel for P-frame can be mapped to CG for CG PUSCH 2.

- Activation or transmission/reception of CG2 can be determined depending on whether CG1 is activated or transmitted/received. Here, activation of CG2 can be configured to occur simultaneously with or after activation of CG1.
- A UE can expect CG2 PUSCH transmission to occur only after CG1 PUSCH transmission. Accordingly, CG2 PUSCH transmission in the next period can be determined based on whether CG1 PUSCH is transmitted.
- When CG1 PUSCH and CG2 PUSCH are transmitted/allocated in TDM or FDM in the same period or partially overlapping periods, when transmitting CG1 PUSCH, a UE may decide that CG2 PUSCH resource is invalid or to skip CG2 PUSCH transmission. Alternatively, a UE may deactivate CG2 or deactivate activated CG2. For example, as shown in FIG. 9, the CG configuration for CG PUSCH 1 may be configured with a period of N times 16 ms or 17 ms (N is a natural number), and the CG configuration for CG PUSCH 2 may be configured with a period of 16 ms or 17 ms. And, CG configurations for N CG PUSCH 2 may overlap within one period of the CG configuration for CG PUSCH 1. That is, as shown in FIG. 9, in the first period of CG PUSCH 2, CG PUSCH 2 and CG PUSCH 1 can be allocated as TDM or FDM. In this case, the resource of CG PUSCH 2 (PUSCH 2 carrying TB2 for I-frame in FIG. 9) can be determined to be invalid or the transmission of CG PUSCH 2 can be determined to be skipped.
- When CG1 PUSCH and CG2 PUSCH are transmitted/allocated in the same slot as TDM or FDM, or when CG1 PUSCH and CG2 PUSCH resources overlap, a UE prioritizes CG1 PUSCH reception regardless of the CG configuration indexes of CG1 and CG2. That is, in this case, a UE can skip CG2 PUSCH resource transmission and transmit CG1 PUSCH resource. For example, as shown in FIG. 9, CG PUSCH 2 (PUSCH 2 carrying TB2 for I-frame in FIG. 9) can be skipped and only CG PUSCH 1 resource can be transmitted.
- When a base station configures and activates a periodic radio resource (e.g., CG) to a UE, the base station may allocate multiple radio resources to the UE within one period. Multiple radio resources may be allocated with the same time/frequency resource allocation in a slot at regular intervals (e.g., M (M is a natural number) slots) (e.g., 3 symbols of radio resources are allocated repeatedly to the same location for each slot), or radio resources having the same length may be allocated consecutively in symbols consecutive to the first radio resource (e.g., 3 symbols of radio resources are allocated consecutively). The number of radio resources N (N is a natural number) may be determined by L1 signaling and/or higher layer signaling. For example, in FIG. 9, only one radio resource is allocated to both CG PUSCH 1 and CG PUSCH 2 in one period, however multiple radio resources may be allocated in one period.
- A base station/UE may perform transmission using one or some of the multiple CG radio resources within the period according to a traffic pattern. Here, considering the time of occurrence of user data of a base station/UE, the fastest radio resource capable of transmitting a transmission block (TB) including user data may be selected.

In the present disclosure, a base station can activate multiple CGs that are connected/associated with each other through one DCI or different DCIs. Here, different CGs can be mapped to the same or different UL cells. In addition, different CGs can be mapped to the same or different UL BWPs (bandwidth parts). In addition, different CGs can be mapped to the same or different RB (resource block) sets. For example, when two CGs are connected/associated, different periodic CG PUSCH resources for the two CGs can be allocated to one or more UL cells or one or more UL BWPs or one or more RB sets.

Embodiment 1: When multiple CG configurations configured for a UE are connected/associated to each other, CG PUSCH for each CG configuration can be transmitted and received as follows.

Here, multiple CG configurations may be mapped to one or more different logical channels, or may be mapped to the same one or more logical channels, or may be mapped to some overlapping logical channels.

When CG1 (i.e., CG Configuration Index 1) (e.g., CG-ConfigIndex) is mapped to a logical channel for I-frame, and CG2 (i.e., CG Configuration Index 2) is mapped to both a logical channel for I-frame and a logical channel for P-frame, and CG1 and CG2 are configured as connected/associated CGs, a UE can transmit different CG PUSCHs as follows.

In such CG configuration, multiple TBs for an I-frame can be transmitted via CG PUSCHs for multiple CGs. For example, as shown in FIG. 9, logical channel data for an I-frame can be divided and transmitted in two TBs via PUSCH1 for CG1 and PUSCH2 for CG2.

Method 1-1: A UE may determine that CG2 resources are valid only when there is CG1 transmission. In other words, when two connected/associated CG configurations are configured for a UE, when CG PUSCH transmission for one of the CG configurations is performed (or an ACK for it is received), the CG PUSCH resource for the other CG configuration may be valid. Here, an invalid CG PUSCH resource may mean that the CG PUSCH resource is not allocated.

That is, assuming that CG2 is allocated PUSCH resources according to CG1, a UE can determine CG PUSCH transmission for CG2 when it determines that there is CG1 PUSCH transmission (i.e., when it is performed) or when it receives HARQ-ACK information (e.g., ACK) for CG PUSCH transmission for CG1.

Method 1-2: A UE can activate CG2 only when there is CG1 transmission. In other words, when two connected/associated CG configurations are configured for a UE, when a CG PUSCH transmission for one CG configuration is performed (or an ACK for it is received), the other CG configuration can be activated.

For example, if a base station indicates activation of CG1 and CG2 with one DCI, a UE may activate CG1 first. Then, if there is a TB to transmit on a CG1 PUSCH (or if HARQ-ACK information (e.g., ACK) for CG1 PUSCH is received), a UE may activate CG2 and transmit a CG2 PUSCH.

Here, if there is no TB to be transmitted with a CG1 PUSCH in a resource allocated for CG1 PUSCH transmission, or if it is determined that there is no data to be transmitted with a CG1 PUSCH for a certain period of time, or if CG1 PUSCH transmission fails or a NACK is received, a UE may determine that CG2 is deactivated (or deactivate the activated CG2).

If necessary, a base station may also indicate activation/release of CG2 with separate second DCI even if the base station has already indicated activation of CG1 and CG2 with first DCI. If two DCIs (the first DCI and the second DCI) activate the same CG2, a UE may re-activate CG2 based on the last received DCI (i.e., the second DCI) even if CG2 is already activated.

Method 1-3: A UE can determine whether to transmit a CG2 PUSCH based on a MAC PDU header or a MAC CE payload/content transmitted via a CG1 PUSCH. In other words, when two connected/associated CG configurations are configured for a UE, whether to transmit a CG PUSCH for one CG configuration can be determined based on the content in a CG PUSCH transmission for the other CG configuration. Here, determining whether to transmit a CG PUSCH may mean whether a CG PUSCH resource for the corresponding CG configuration is allocated (i.e., whether it is valid) or may mean whether the corresponding CG configuration is activated.

For example, an LCID field or a MAC CE of a MAC PDU transmitted via a CG1 PUSCH may indicate (or indicate) a start of a GOP pattern, or indicate a logical channel corresponding to an I-frame, or indicate connected CG2 transmission or activation. In this case, a UE may activate the deactivated CG2 and transmit a TB of the next frame (e.g., P-frame) via an activated CG2 PUSCH.

Embodiment 2: When multiple CG configurations configured for a UE are connected/linked to each other, a CG PUSCH for each CG configuration can be transmitted and received as follows.

Here, the multiple CG configurations can be mapped to one or more different logical channels, or can be mapped to the same one or more logical channels, or can be mapped to some overlapping logical channels.

If CG1 (i.e., CG Configuration Index 1) is mapped to a logical channel for I-frame, and CG2 (i.e., CG Configuration Index 2) is mapped to a logical channel for P-frame, and CG1 and CG2 are configured as connected/associated CGs, a UE can transmit different CGs as follows.

In this CG configuration, multiple TBs for an I-frame can be transmitted on multiple CG PUSCHs for CG1. For example, as shown in FIG. 9, logical channel data for an I-frame can be divided and transmitted in two TBs through different (consecutive) PUSCHs for CG1.

Method 2-1: CG PUSCH resources may not be allocated to a specific (one or more) CG period of CG2. In other words, when two linked/associated CG configurations are configured for a UE, CG PUSCH resources in specific one or more periods of a specific CG configuration may not be allocated (invalid).

For example, a UE may determine that CG PUSCH resources allocated to specific (one or more) CG periods of CG2 that overlap with CG1 PUSCH transmission are invalid. And/or, a base station may not allocate CG PUSCH resources to specific (one or more) CG periods of CG2 that overlap with CG1 PUSCH transmission.

In this manner, a mask (i.e., a duration during which a CG PUSCH is not transmitted) may be configured for each CG period to invalidate or not allocate CG PUSCH resources of a specific M-th (or one or more) CG periods for which the mask is configured. Accordingly, a UE and a base station may invalidate or not allocate CG PUSCH resources of a specific M-th (or one or more) CG periods for which the mask is configured.

Method 2-2: CG2 transmission can be skipped in (one or more) CG2 periods overlapping with CG1. In other words, when two linked/associated CG configurations are configured for a UE, CG PUSCH transmission can be skipped within one or more specific periods of a specific CG configuration overlapping with another CG configuration. That is, CG PUSCH resources are allocated within one or more periods, however CG PUSCH transmission can be skipped.

A UE may skip PUSCH transmission allocated to a specific (one or more) CG period of CG2 that overlaps with CG1 PUSCH transmission.

In this manner, a mask may be configured in units of CG periods to skip the specific M-th (or one or more) overlapping CG periods. Accordingly, a UE and a base station may skip the CG PUSCH transmission of the specific M-th (or one or more) CG periods for which the mask is configured.

Here, an ACK may be transmitted as HARQ-ACK information for the skipped CG PUSCH. Alternatively, a response to the HARQ-ACK information for the skipped CG PUSCH may also be skipped.

Method 2-3: If CG1 PUSCH transmission is performed in a specific CG1 period, or if a CG1 PUSCH is transmitted in a specific CG1 period, CG2 PUSCH resource(s) of CG2 period(s) starting after the CG1 PUSCH transmission may be considered valid. Accordingly, a UE may perform CG2 PUSCH transmission(s) in the corresponding valid CG2 PUSCH resource(s). In other words, when two connected/associated CG configurations are configured for a UE, if a CG PUSCH for one CG configuration is transmitted, a CG PUSCH may be transmitted within one or more periods for the other CG configuration starting after the corresponding CG PUSCH transmission.

Embodiment 3: When multiple CG configurations configured for a UE are connected/linked to each other, CG PUSCH transmission for one CG configuration may be indicated through CG PUSCH transmission for another CG configuration.

Here, the multiple CG configurations may be mapped to one or more different logical channels, or may be mapped to the same one or more logical channels, or may be mapped to some overlapping logical channels.

If CG1 (i.e., CG Configuration Index 1) is mapped to a logical channel for I-frame, and CG2 (i.e., CG Configuration Index 2) is mapped to a logical channel for P P-frame, and CG1 and CG2 are configured as connected/associated CGs, a UE may activate all connected/associated CGs according to DCI and indicate transmission of CG1 PUSCH(s) or CG2 PUSCH(s) of period N+k (K is a natural number) through CG1 PUSCH transmission of period N (N is a natural number).

In other words, when two connected/linked CG configurations are configured for a UE, a CG PUSCH transmission in a specific period of a specific CG configuration may indicate subsequent CG PUSCH transmission in one or more periods for that CG configuration and/or another CG configuration.

For example, a UE may indicate the start of a GOP pattern through a sub-header of a CG1 PUSCH or a MAC CE in period N, or may indicate a logical channel corresponding to the I-frame, or may indicate connected CG2 transmission or activation. The UE may perform CG2 PUSCH transmission during the k-th period (k= 1, 2, 3,..., M) after the CG1 PUSCH transmission. The UE may not perform CG2 PUSCH transmission until the next CG1 PUSCH transmission after performing M CG2 PUSCH transmissions according to the GOP pattern. A base station may expect CG2 PUSCH transmission during the k-th period (k= 1, 2, 3,..., M) after the CG1 PUSCH transmission according to the above indication.

Here, a UE can perform multiple CG2 PUSCH transmissions following the k-th period. For example, if three P-frame uplink transmissions are expected immediately following the I-frame according to information indicated by a higher layer of the UE or information notified by a base station, the UE can perform CG2 PUSCH transmissions during the k-th, k+1th, and k+2th periods (k= 1, 2, 3,..., M) immediately following the CG1 PUSCH transmission.

In addition, a UE can receive information about the GOP pattern from a base station through an RRC message or a MAC CE or DCI for configuring or activating CG1 and CG2.

Embodiment 4: When multiple CG configurations configured for a UE are connected/linked to each other, retransmission of CG PUSCHs for multiple CG configurations can be performed as follows.

Here, multiple CG configurations may be mapped to different one or more logical channels, or may be mapped to the same one or more logical channels, or may be mapped to some overlapping logical channels.

If a TB of a CG1 (i.e., CG Configuration Index 1) PUSCH and a TB of a CG2 (i.e., CG Configuration Index 2) PUSCH are not successfully received, a base station may schedule two TDMed and/or FDMed PUSCH (retransmission) resources for two TBs of a CG1 PUSCH and a CG2 PUSCH with one DCI (for retransmission indication).

Here, if a common HARQ process ID value indicating the CG Configuration Index (e.g., CG-ConfigIndex) of the CG1 PUSCH and the CG Configuration Index (e.g., CG-ConfigIndex) of the CG2 PUSCH is configured, the DCI may indicate the common HARQ process ID value.

Alternatively, if individual HARQ process ID values indicating the CG Configuration Index of the CG1 PUSCH (e.g., CG-ConfigIndex) and the CG Configuration Index of the CG2 PUSCH (e.g., CG-ConfigIndex) are configured, the DCI indicates respective HARQ process ID value indicating the CG Configuration Index of the CG1 PUSCH and the CG Configuration Index of the CG2 PUSCH, respectively. Here, each HARQ process ID value may be the same or different.

Meanwhile, when CG1 and CG2 are transmitted to different cells, the DCI may indicate a cell index value indicating a serving cell of a CG1 PUSCH and a serving cell of a CG2 PUSCH, respectively. Alternatively, multiple CGs of different cells may be configured to have the same or different CG Configuration Index (e.g., CG-ConfigIndex) values, and DCI (for retransmission instruction) may indicate a HARQ process ID mapped to the same or different CG Configuration Index (e.g., CG-ConfigIndex) values.

Here, a CS-RNTI for scrambling the CRC of DCI (for retransmission instruction) or a separate M-CS-RNTI for the purpose of multiple CG retransmission may be configured.

**EP 4 518 510 A1**

In addition, a base station may configure a separate search space having a separate search space ID for DCI (for retransmission indication). In this case, a UE may monitor a PDCCH in the separate search space only when one or both of the CGs (e.g., CG1 and CG2) are activated. For example, this search space may be a separate search space for data scheduling of a logical channel for XR. In this case, the search space may be configured to be used for the purpose of allocating CG retransmission or CG retransmission or dynamic UL/DL scheduling resources for XR.

Embodiment 5: When multiple CG configurations configured for a UE are connected/linked to each other, a CG PUSCH for each CG configuration can be transmitted and received as follows.

Here, the multiple CG configurations can be mapped to one or more different logical channels, or can be mapped to the same one or more logical channels, or can be mapped to some overlapping logical channels.

When a CG1 (i.e., CG Configuration Index 1) PUSCH and a CG2 (i.e., CG Configuration Index 2) PUSCH are allocated to the same slot, or when a CG 1 PUSCH and a CG2 PUSCH partially or completely overlap in time and/or frequency resources, a base station and a UE may determine that the CG1 PUSCH and the CG2 PUSCH are switched to one or two CG PUSCH resources.

For example, it can be assumed that multiple PUSCHs are switched to one CG PUSCH with the largest resource among the multiple PUSCHs, or that two PUSCH resources are combined in time and frequency to be switched to one CG PUSCH. In this case, the UE can transmit only one CG PUSCH. In other words, a UE can transmit a CG PUSCH only on one CG PUSCH resource with the largest resource among the two PUSCHs for the CG1 configuration and the CG2 configuration (i.e., transmit only data for the logical channel mapped to the corresponding CG configuration) and skip the CG PUSCH transmission on the remaining CG PUSCH resources. Alternatively, a UE can combine the multiple PUSCH resources and consider them as one CG PUSCH resource to transmit a CG PUSCH (i.e., transmit all data for the logical channels mapped to the two CG1 configurations, or transmit only data for the logical channel mapped to one CG configuration).

Here, a base station and aa UE assume that one combined CG PUSCH corresponds to a primary CG or a CG of a lower CG configuration index (e.g., CG-ConfigIndex), and a HARQ-ACK for the CG PUSCH of the CG can be transmitted. In addition, DCI (for indicating retransmission) can allocate CG retransmission resources by indicating the CG configuration index of the primary CG or the lower CG configuration index.

In addition, overlapping symbols and/or physical resource blocks (PRBs) in a CG1 PUSCH resource and a CG2 PUSCH resource may be divided evenly or at a specific ratio, and the divided resources may be allocated to adjacent non-overlapping a CG1 PUSCH resource and a CG2 PUSCH resource, respectively, so that the CG1 PUSCH resource and the CG2 PUSCH resource may be reconfigured. In this case, a UE may transmit two CG PUSCHs through the reconfigured CG1 PUSCH resource and CG2 PUSCH resource.

Here, among the reconstructed CG1 PUSCH and CG2 PUSCH, an earlier CG PUSCH may be designated as CG1 or CG2 based on a start symbol or an end symbol, and the remaining CG PUSCH may be designated as CG2 or CG1. Alternatively, (in case of the same start or end symbol), among the reconstructed CG1 PUSCH and CG2 PUSCH, a lower CG PUSCH may be designated as CG1 or CG2 based on a lowest PRB or a highest PRB, and the remaining CG PUSCH may be designated as CG2 or CG1.

In addition, the reconfigured CG1 and CG2 may have the same CG configuration index (e.g., CG-ConfigIndex) value configured to CG1 and CG2 before the reconfiguration. Therefore, a HARQ process ID or a CG configuration index (e.g., CG-ConfigIndex) value indicated by DCI for retransmission indication or DCI for CG release may be identically mapped to the reconfigured CG1 and CG2.

In addition, the logical channel that is previously mapped to CG1 and the logical channel that is mapped to CG2 can be identically mapped to the reconfigured CG1 and CG2.

Embodiment 6: When multiple CG configurations configured to a UE are connected/associated to each other, a CG PUSCH for each CG configuration can be transmitted and received as follows.

When CG1 (i.e., CG Configuration Index 1) and CG2 (i.e., CG Configuration Index 2) are connected/associated, CG2 (e.g., CG with a shorter period) can always be designated/configured as LP. CG1 (e.g., CG with a longer period) can be configured as LP or HP, and if there is no priority setting, it can be assumed as LP. Alternatively, when CG1 and CG2 are connected/associated, CG2 (e.g., CG with a shorter period) can always be designated/configured as HP. Alternatively, CG1 (e.g., CG with a longer period) can be designated as priority for XR, and CG2 (e.g., CG with a shorter period) can be designated as LP. Alternatively, both connected/associated CG1 and CG2 can be designated as priority for XR.

In this case, if a CG1 PUSCH and another CG PUSCH or a CG2 PUSCH partially or completely overlap in frequency and/or time domain, a UE may preferentially transmit a CG1 PUSCH which is HP. In addition, the UE may skip transmitting a CG PUSCH for the remaining CG2.

In addition, priority of a HARQ-ACK for a CG1 PUSCH can be determined according to CG1 priority, and priority of a HARQ-ACK for a CG2 PUSCH can be determined according to CG2 priority. Based on these priorities, PUCCH for the corresponding HARQ-ACK can be multiplexed with other UCI.

Embodiment 7: When one CG configuration is configured for a UE, a CG PUSCH for the corresponding CG configuration can be transmitted and received as follows.

For a specific CG (e.g., CG1), TDMed PUSCH occasions (i.e., TOs) or FDMed PUSCH occasions (i.e., TOs) are configured in one CG period, and M-TRP repeated transmission of a PUSCH of the same TB or multiple PUSCH transmissions of different TBs can be supported. Here, another CG (e.g., CG2) can be configured with only one PUSCH occasion (i.e., TO) or with multiple PUSCH occasions (i.e., TOs) mapped to a single TRP, and CG1 and CG2 can be connected/associated to each other.

- For TDMed PUSCH transmission, if multiple PUSCH resources are allocated in the conventional PUSCH repetition manner, multiple TBs can be transmitted using different PUSCH resources instead of repetition of the same TB. Here, slot-based PUSCHs can be arranged/allocated and transmitted in different slots, or sub-slot-based PUSCHs can be arranged/allocated and transmitted in one or multiple slots.
- For FDMed PUSCH transmission, multiple PUSCH resources can be allocated with FDM in the same slot of the same period. For example, different TBs for short packet data budget (PDB) or different TBs for I-frame can be configured to be transmitted with FDM in the same slot.
- For the TDMed CG PUSCH or FDMed CG PUSCH resources that are repeated N times in one period, M (M is a natural number) TBs can be transmitted. Here, PUSCH resources in one period are grouped into N/M TDMed PUSCH sets or FDMed PUSCH sets, and one TB can be repeatedly transmitted in one TDMed or FDMed PUSCH set. For example, if four PUSCH resources are allocated in one CG period, the first two TDMed or FDMed CG PUSCH resources and the next two TDMed or FDMed CG PUSCH resources are configured to different CG PUSCH sets, and different TBs can be transmitted through different PUSCH sets. Here, TDM or FDM can also be performed between different PUSCH sets.

Here, the FDMed CG PUSCH resources or the FDMed CG PUSCH sets may be allocated to the same or different UL BWPs or to the same or different UL cells.

In addition, the PUSCHs belonging to the same CG PUSCH set are configured to the same time/frequency resource size, but the PUSCHs belonging to different PUSCH sets may also be configured to different time/frequency resource sizes.

For example, in FIG. 9, two PUSCH1s for CG1 may be transmitted in the same CG period, and different TBs may be transmitted.

In addition, different PUSCH sets within the same CG period may be mapped to different HARQ process IDs, and different PUSCHs belonging to the same PUSCH set may be mapped to the same HARQ process ID.

For example, HARQ process ID1 for the first CG PUSCH set is determined according to Equation 7 below, and HARQ process ID2 for the second CG PUSCH set of the same CG period can be determined as HARQ process ID1 of the first CG PUSCH set + the number of HARQ processes (nrofHARQ-Processes) (see Equation 8) or HARQ process ID1 of the first CG PUSCH set + offset (see Equation 9).

HARQ Process ID1 = [floor (CURRENT_slot × 10 / (*numberOfSlotsPerFrame* × *periodicity*))] modulo *nrofHARQ-Processes + harq-ProcID-Offset*  [Equation 7]

In Equation 7, CURRENT_slot = [(SFN × numberOfSlotsPerFrame) + slot number in the frame]. numberOf-SlotsPerFrame means the number of consecutive slots per frame.

The HARQ process ID2 of the second CG PUSCH set can be determined according to Equation 8 or Equation 9 below.

【Equation 8】

HARQ Process ID2 = HARQ Process ID1 + *nrofHARQ-Processes*

【Equation 9】

HARQ Process ID2 = HARQ Process ID1 + *harq-ProcID-Set2-Offset*

In Equation 9, the offset (harq-ProcID-Set2-Offset) can be configured by a base station through an RRC message or activation DCI.

In addition, depending on the configuration of a base station, different CG PUSCH sets for a UE may be configured to be mapped to different TRPs and TCI states. In addition, the same TB may be repeatedly transmitted as Multiple TRPs through different CG PUSCH sets. In this case, DMRSs of different PUSCH sets may be transmitted QCLed to different TCI states. In other words, uplink transmission spatial filters of CG PUSCHs for different PUSCH sets may be individually determined based on different TCI states.

For example, in FIG. 9, two PUSCH1s for CG1 may be configured to transmit the same TB, although they are transmitted in the same CG period. Here, different PUSCH1s may be mapped to the same or different TCI states, so that the same TB may be repeatedly transmitted. Here, different PUSCH sets of the same period may have the same HARQ process ID value.

Embodiment 8: When multiple CG configurations configured for a UE are connected/associated to each other, CG PUSCHs for each CG configuration may be transmitted and received as follows.

Here, multiple CG configurations may be mapped to different one or more logical channels, or may be mapped to the same one or more logical channels, or may be mapped to some overlapping logical channels.

CG1 (i.e., CG Configuration Index 1) and CG2 (i.e., CG Configuration Index 2) may be mapped to different TCI states, and CG1 PUSCH resources and CG2 PUSCH resources may be configured to be TDM or FDM in the same slot.

A base station may inform a UE of information on which different TCI states are mapped to different CG Configuration Indexes (e.g., CG-ConfigIndex) via RRC signaling and/or a MAC CE. For example, the CG configuration information for each CG Configuration Index (e.g., configuredGrantConfig IE, see Table 6) may include information on which TCI state is mapped.

If TCI states for a CG1 PUSCH and a CG2 PUSCH is to be changed (i.e., TCI state activation and/or deactivation) through a MAC CE, etc., the MAC CE may indicate a TCI state mapped for each CG Configuration Index (e.g., CG-ConfigIndex) for the two activated CG Configuration Indices (e.g., CG-ConfigIndex). A UE may activate or deactivate the indicated TCI state for the indicated CG Configuration Index (e.g., CG-ConfigIndex) according to the received MAC CE. After the time of completing reception of the received MAC CE or after the time of transmitting HARQ-ACK information (e.g., ACK) for the received MAC CE, the UE may apply the indicated (i.e., changed) TCI state for CG PUSCH transmission of the first CG period.

Additionally, a CG1 period and a CG2 period can be configured to be aligned (and can be configured to the same period). Here, a UE can transmit the same TB with different TCI states through a CG1 PUSCH of the aligned CG1 period and a CG2 PUSCH of the CG2 period. Here, the CG1 transmission and the CG2 transmission can transmit the same TB toward different TRPs.

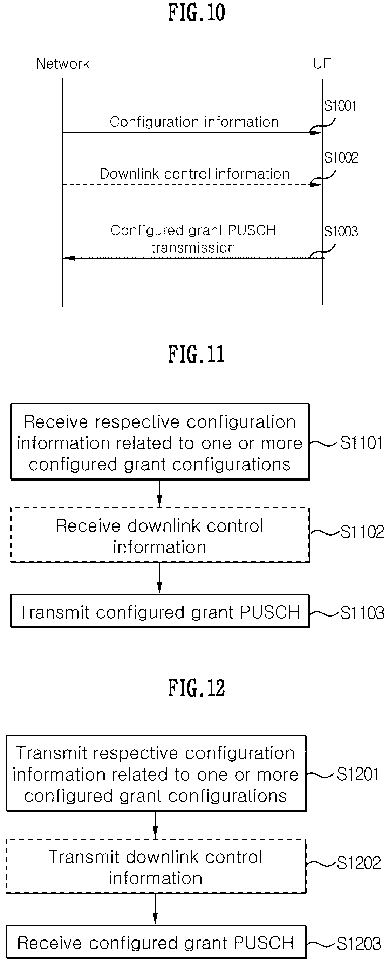

FIG. 10 illustrates a signaling procedure between a network and a UE for a configured grant PUSCH transmission/reception method according to an embodiment of the present disclosure.

FIG. 10 illustrates signaling between a network (e.g., TRP 1, TRP 2) and a UE in a situation of multiple TRPs (i.e., M-TRP, or multi-cell, all TRPs hereinafter may be replaced with cells) to which the methods proposed in the present invention (e.g., Embodiments 1 to 8, a combination of one or more of the proposed methods in Embodiments 1 to 8) may be applied. Here, the UE/network are only examples and may be replaced with various devices. FIG. 10 is merely for convenience of explanation and does not limit the scope of the present disclosure. In addition, some step(s) illustrated in FIG. 10 may be omitted depending on the situation and/or setting.

The signaling method described in Fig. 10 can be extended and applied to signaling between multiple TRPs and multiple UEs. In the following description, the network can be one base station including multiple TRPs, and can be one cell including multiple TRPs. For example, an ideal/non-ideal backhaul can be set between TRP 1 and TRP 2 that constitute the network. Also, the following description is based on multiple TRPs, but it can be equally extended and applied to transmission through multiple panels. In addition, in the present disclosure, the operation of the UE receiving a signal from TRP1/TRP2 can also be interpreted/described as (or can be an operation of) the UE receiving a signal from the network (via/using TRP1/2), and the operation of the terminal transmitting a signal to TRP1/TRP2 can also be interpreted/described as (or can be an operation of) the UE transmitting a signal to the network (via/using TRP1/TRP2), and vice versa.

A base station may be a general term for objects that transmit and receive data to and from a terminal. For example, the base station may be a concept including one or more transmission points (TPs), one or more transmission and reception points (TRPs), etc. In addition, a TP and/or a TRP may include a panel of a base station, a transmission and reception unit, etc. In addition, "TRP" may be substituted with an expression such as a panel, an antenna array, a cell (e.g., macro cell / small cell / pico cell, etc.), a TP (transmission point), a base station (base station, gNB, etc.) and applied. As described above, TRPs may be classified according to information (e.g., index, ID) on a CORESET group (or CORESET pool). For example, when one UE is configured to transmit and receive multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

A UE can receive configuration information from a network via/using TRP 1 (and/or TRP 2) (S1001).

The configuration information may include information related to configuration of a network (e.g., TRP configuration) / information related to transmission and reception based on M-TRP (e.g., resource allocation, etc.). Here, the configuration information may be transmitted through higher layer signaling (e.g., RRC signaling, MAC-CE, etc.).

The configuration information may include configuration information related to the CG configuration described in the above-described proposed method (e.g., Embodiments 1 to 8, a combination of one or more of the proposed methods in Embodiments 1 to 8). For example, one or more CG configurations may be configured to a UE, and the configuration information may include individual configuration information (e.g., configuredGrantConfig IE) for each of the one or more CG configurations. Here, the individual configuration information for each of the one or more CG configurations may include information/parameters exemplified in Table 6 above.

In addition, for example, the configuration information may include information for configuring a joint TCI and/or a separate DL/UL TCI. For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH).

In addition, for example, according to the above-described embodiment, individual configuration information for each CG configuration may include information on a logical channel associated with the corresponding CG configuration.

In addition, according to the above-described embodiment, individual configuration information for each CG configuration may include information on a TCI state for the corresponding CG configuration. Here, a TCI state for the corresponding CG set configuration ting may be configured/indicated within the list of the TCI states.

Meanwhile, although not shown in FIG. 10, a UE may receive a MAC CE (i.e., activation command) from a network to activate and/or deactivate an uplink (or joint) TCI state via/using TRP 1 (and/or TRP 2). This MAC CE may indicate activation and/or deactivation of one or more TCI states (i.e., one or more TCI states in the list of TCI state) for an uplink channel/signal, and may also be used to map one TCI state (i.e., a TCI state in the TCI state list) for an uplink channel/signal to a codepoint in a TCI field in the DCI.

A UE can receive downlink control information from a network via/using TRP 1 (and/or TRP 2) (S1002).

As described above, CG Type 1 PUSCH transmission can be configured to operate semi-statically when configuration information for CG configuration (e.g., configuredGrantConfig including rrc-ConfiguredUplinkGrant) is received without detection of UL grant in DCI. In this case, step S1002 can be omitted. Additionally, in this case, TCI states for one or more CG configurations configured in a UE can be configured by configuration information related to the CG configuration (e.g., configuredGrantConfig IE) or configured/indicated by the MAC CE described above.

In addition, CG Type 2 PUSCH transmission can be semi-statically scheduled by UL grant in a valid activation DCI after receiving configuration information for CG configuration (e.g., configuredGrantConfig not including rrc-ConfiguredUplinkGrant). In this case, the DCI of step S1002 may correspond to the valid activation DCI. In addition, in this case, TCI states for one or more CG configurations configured in a UE can be configured by the configuration information related to the CG configuration (e.g., configuredGrantConfig IE) or configured/indicated by the MAC CE described above or indicated by the valid activation DCI.

A UE transmits a configured grant (CG) PUSCH to a network via/using TRP 1 (and/or TRP 2) (S1003).

Here, a UE may transmit a CG PUSCH to a network based on the operation described in the proposed method described above (e.g., Embodiments 1 to 8, a combination of one or more of the proposed methods in Embodiments 1 to 8).

For example, according to the above Embodiment 1, when multiple CG configurations configured for a UE are connected/associated with each other, the UE may determine that resources for other CG configurations are valid or that other CG configurations are activated only when there is a transmission for a specific CG configuration. In addition, a UE may determine whether to transmit a CG PUSCH for another CG through a CG PUSCH for a specific CG.

In addition, for example, according to the Embodiment 2, when multiple CG configurations configured for a UE are connected/associated to each other, in a CG PUSCH transmission period for CG2 configuration overlapping with CG1 configuration, the CG PUSCH resource for CG2 may not be allocated, and the UE may skip the CG PUSCH transmission. In addition, only when there is a CG1 PUSCH transmission, the CG PUSCH for the CG2 configuration may be transmitted in the next CG PUSCH transmission period.

In addition, for example, according to the above Embodiment 3, when multiple CG configurations configured for a UE are connected/associated with each other, CG PUSCH transmission for one CG configuration may be indicated through CG PUSCH transmission for another CG configuration.

In addition, for example, according to the above Embodiment 5, when multiple CG configurations configured for a UE are connected/associated with each other, if a CG1 PUSCH and a CG2 PUSCH partially or completely overlap time and/or frequency resources, the CG1 PUSCH and the CG2 PUSCH may be switched/reconfigured into one or two CG PUSCH resources.

In addition, for example, when multiple CG configurations configured for a UE are connected/associated to each other according to the above Embodiment 6, a priority for each CG configurations can be configured, and the UE can perform CG PUSCH transmission by considering the priority for each CG configuration.

In addition, for example, according to the Embodiment 7, a plurality of CG PUSCH resources within a CG PUSCH transmission period for a single CG configuration may be divided into a plurality of CG PUSCH resource sets (i.e., a first CG PUSCH resource set and a second CG PUSCH resource set). In addition, the same or different TBs may be transmitted through a CG PUSCH within each CG PUSCH resource set. Here, a different TCI state may be configured/indicated for each CG PUSCH resource set, and an uplink transmission spatial filter for CG PUSCH transmission in each CG PUSCH resource set may be individually determined based on a TCI state for a corresponding CG PUSCH resource set.

In addition, for example, according to the Embodiment 8, a plurality of CG PUSCH resources in the same CG PUSCH transmission period for different CG configurations may be divided into a plurality of CG PUSCH resource sets (i.e., a first CG PUSCH resource set and a second CG PUSCH resource set). In this case, for example, each CG PUSCH resource set may correspond to each CG configuration. In other words, each CG configuration may mean each CG PUSCH resource set. In addition, the same or different TBs may be transmitted through a CG PUSCH within each CG PUSCH resource set. Here, a different TCI state may be configured/indicated for each CG PUSCH resource set, and an uplink transmission spatial filter for CG PUSCH transmission in each CG PUSCH resource set may be individually determined based on a TCI state for a corresponding CG PUSCH resource set.

Meanwhile, for example, when multiple CG configurations configured for a UE are connected/associated to each other, after the UE transmits a CG PUSCH for CG1 configuration and a CG PUSCH for CG2 configuration according to other embodiments, retransmission of a CG PUSCH for the multiple CG configurations can be instructed through one DCI according to Embodiment 4.

FIG. 11 is a diagram illustrating an operation of a UE for a configured grant PUSCH transmission/reception method according to an embodiment of the present disclosure.

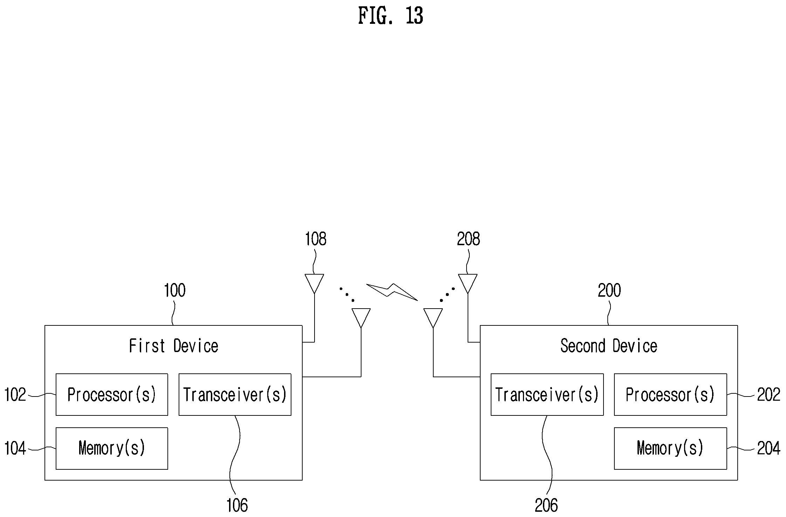

Referring to FIG. 11, FIG. 11 illustrates an operation of a UE based on the proposed methods (e.g., Embodiments 1 to 8, a combination of one or more of the proposed methods in Embodiments 1 to 8). The example of FIG. 11 is for convenience of explanation and does not limit the scope of the present disclosure. Some step(s) illustrated in FIG. 11 may be omitted depending on the situation and/or setting. In addition, a UE in FIG. 11 is only one example and may be implemented as a device illustrated in FIG. 13 below. For example, the processor (102/202) of FIG. 13 may control the transceiver (106/206) to transmit and receive channels/signals/data/information, etc., and may also control the channel/signal/data/information to be transmitted or received to be stored in the memory (104/204).

In addition, the operation of FIG. 11 may be processed by one or more processors (102, 202) of FIG. 13, and the operation of FIG. 11 may be stored in a memory (e.g., one or more memories (104, 204) of FIG. 14) in the form of a command/program (e.g., an instruction, an executable code) for driving at least one processor (e.g., 102, 202) of FIG. 13.

A UE receives respective configuration information related to one or more configured grant (CG) configurations from a base station (via/using TRP 1 (and/or TRP 2)) (S1101).

The configuration information related to CG configuration may include configuration information related to the CG configuration described in the above-described proposed method (e.g., Embodiments 1 to 8, a combination of one or more of the proposed methods in Embodiments 1 to 8). For example, one or more CG configurations may be configured to a UE, and the individual configuration information (e.g., configuredGrantConfig IE) for each of the one or more CG configurations may include information/parameters exemplified in Table 6 above.

Additionally, although not shown in FIG. 11, a UE may receive configuration information for configuring a joint TCI and/or a separate DL/UL TCI from a base station (via/using TRP 1 (and/or TRP 2)). For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH) .

In addition, for example, according to the above-described embodiment, individual configuration information for each CG configuration may include information on a logical channel associated with the corresponding CG configuration.

In addition, according to the above-described embodiment, individual configuration information for each CG configuration may include information on a TCI state for the corresponding CG configuration. Here, a TCI state for the corresponding CG set configuration ting may be configured/indicated within the list of the TCI states.

Meanwhile, although not shown in FIG. 11, a UE may receive a MAC CE (i.e., activation command) from a base station to activate and/or deactivate an uplink (or joint) TCI state (via/using TRP 1 (and/or TRP 2)). This MAC CE may indicate activation and/or deactivation of one or more TCI states (i.e., one or more TCI states in the list of TCI state) for an uplink channel/signal, and may also be used to map one TCI state (i.e., a TCI state in the TCI state list) for an uplink channel/signal to a codepoint in a TCI field in the DCI.

For example, according to the Embodiment 8, a UE may receive a single MAC CE for activation and/or deactivation of a TCI state for a first CG PUSCH resource set (e.g., a first CG configuration) and a second CG PUSCH resource set (e.g., a second CG configuration) from a base station (via/using TRP 1 (and/or TRP 2)). In this case, the TCI state indicated by the MAC CE may be activated and/or deactivated from the first CG PUSCH transmission period after the time point at which the UE receives the MAC CE or the time point at which the UE transmits an ACK for the MAC CE.

A UE can receive downlink control information from a base station (via/using TRP 1 (and/or TRP 2)) (S1102).

As described above, CG Type 1 PUSCH transmission can be configured to operate semi-statically when configuration information for CG configuration (e.g., configuredGrantConfig including rrc-ConfiguredUplinkGrant) is received without detection of UL grant in DCI. In this case, step S1102 can be omitted. Additionally, in this case, TCI states for one or more CG configurations configured in a UE can be configured by configuration information related to the CG configuration (e.g., configuredGrantConfig IE) or configured/indicated by the MAC CE described above.

In addition, CG Type 2 PUSCH transmission can be semi-statically scheduled by UL grant in a valid activation DCI after receiving configuration information for CG configuration (e.g., configuredGrantConfig not including rrc-ConfiguredUplinkGrant). In this case, the DCI of step S1102 may correspond to the valid activation DCI. In addition, in this case, TCI states for one or more CG configurations configured in a UE can be configured by the configuration information related to the CG configuration (e.g., configuredGrantConfig IE) or configured/indicated by the MAC CE described above or indicated by the valid activation DCI.

A UE transmits a configured grant (CG) PUSCH (via/using TRP 1 (and/or TRP 2)) to a base station (S1103).

Here, a UE can transmit the same transport block (TB) or different TBs to a base station via CG PUSCH transmissions within a first CG PUSCH resource set and a second CG PUSCH resource set for one or more CG configurations.

In addition, different Transmission Configuration Indication (TCI) states are configured for the first CG PUSCH resource set and the second CG PUSCH resource set, and the uplink transmission spatial filters for the CG PUSCHs in the first CG PUSCH resource set and the second CG PUSCH resource set can be individually determined based on the different TCI states. That is, the DMRS of the CG PUSCHs in the first CG PUSCH resource set and the second CG PUSCH resource set can be QCLed with reference to the different TCI states.

Here, for example, according to the Embodiment 7, the first CG PUSCH resource set and the second CG PUSCH resource set may be associated with a single CG configuration. In this case, the same HARQ process identifier (ID) may be determined for the first CG PUSCH resource set and the second CG PUSCH resource set within the same CG PUSCH transmission period.

In addition, for example, according to the Embodiment 8, the first CG PUSCH resource set and the second CG PUSCH resource set may be associated with the first CG configuration and the second CG configuration, respectively. In this case, the CG PUSCH transmission periods for the first CG configuration and the second CG configuration may be aligned.

FIG. 12 is a diagram illustrating an operation of a base station for a configured grant PUSCH transmission/reception method according to an embodiment of the present disclosure.

Referring to FIG. 12, FIG. 12 illustrates an operation of a base station based on the proposed methods (e.g., Embodiments 1 to 8, a combination of one or more of the proposed methods in Embodiments 1 to 8). The example of FIG. 12 is for convenience of explanation and does not limit the scope of the present disclosure. Some step(s) illustrated in FIG. 12 may be omitted depending on the situation and/or setting. In addition, a base station in FIG. 12 is only one example and may be implemented as a device illustrated in FIG. 13 below. For example, the processor (102/202) of FIG. 13 may control the transceiver (106/206) to transmit and receive channels/signals/data/information, etc., and may also control the channel/signal/data/information to be transmitted or received to be stored in the memory (104/204).

In addition, the operation of FIG. 12 may be processed by one or more processors (102, 202) of FIG. 13, and the operation of FIG. 12 may be stored in a memory (e.g., one or more memories (104, 204) of FIG. 13) in the form of a command/program (e.g., an instruction, an executable code) for driving at least one processor (e.g., 102, 202) of FIG. 13.

A base station transmits respective configuration information related to one or more configured grant (CG) configurations to a UE (via/using TRP 1 (and/or TRP 2)) (S1201).

The configuration information may include configuration information related to the CG configuration described in the above-described proposed method (e.g., Embodiments 1 to 8, a combination of one or more of the proposed methods in Embodiments 1 to 8). For example, one or more CG configurations may be configured to a UE, and the individual configuration information (e.g., configuredGrantConfig IE) for each of the one or more CG configurations may include information/parameters exemplified in Table 6 above.

Additionally, although not shown in FIG. 12, a base station may transmit configuration information for configuring a joint TCI and/or a separate DL/UL TCI to a UE (via/using TRP 1 (and/or TRP 2)). For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH) .

In addition, for example, according to the above-described embodiment, individual configuration information for each CG configuration may include information on a logical channel associated with the corresponding CG configuration.

In addition, according to the above-described embodiment, individual configuration information for each CG configuration may include information on a TCI state for the corresponding CG configuration. Here, a TCI state for the corresponding CG set configuration ting may be configured/indicated within the list of the TCI states.

Meanwhile, although not shown in FIG. 12, a base station may transmit a MAC CE (i.e., activation command) to a UE to activate and/or deactivate an uplink (or joint) TCI state (via/using TRP 1 (and/or TRP 2)). This MAC CE may indicate activation and/or deactivation of one or more TCI states (i.e., one or more TCI states in the list of TCI state) for an uplink channel/signal, and may also be used to map one TCI state (i.e., a TCI state in the TCI state list) for an uplink channel/signal to a codepoint in a TCI field in the DCI.

For example, according to the Embodiment 8, a base station may transmit a single MAC CE for activation and/or deactivation of a TCI state for a first CG PUSCH resource set and a second CG PUSCH resource set to a UE (via/using TRP 1 (and/or TRP 2)). In this case, the TCI state indicated by the MAC CE may be activated and/or deactivated from the first CG PUSCH transmission period after the time point at which the UE receives the MAC CE or the time point at which the UE transmits an ACK for the MAC CE.

A base station can transmit downlink control information to a UE (via/using TRP 1 (and/or TRP 2)) (S1202).

As described above, CG Type 1 PUSCH transmission can be configured to operate semi-statically when configuration information for CG configuration (e.g., configuredGrantConfig including rrc-ConfiguredUplinkGrant) is received without detection of UL grant in DCI. In this case, step S1202 can be omitted. Additionally, in this case, TCI states for one or more CG configurations configured in a UE can be configured by configuration information related to the CG configuration (e.g., configuredGrantConfig IE) or configured/indicated by the MAC CE described above.

In addition, CG Type 2 PUSCH transmission can be semi-statically scheduled by UL grant in a valid activation DCI after receiving configuration information for CG configuration (e.g., configuredGrantConfig not including rrc-ConfiguredUplinkGrant). In this case, the DCI of step S1202 may correspond to the valid activation DCI. In addition, in this case, TCI states for one or more CG configurations configured in a UE can be configured by the configuration information related to the CG configuration (e.g., configuredGrantConfig IE) or configured/indicated by the MAC CE described above or indicated by the valid activation DCI.

A base station receives a configured grant (CG) PUSCH (via/using TRP 1 (and/or TRP 2)) from a UE (S1203).

Here, a base station can receive the same transport block (TB) or different TBs from a UE via CG PUSCH transmissions within a first CG PUSCH resource set and a second CG PUSCH resource set for one or more CG configurations.

In addition, different Transmission Configuration Indication (TCI) states are configured for the first CG PUSCH resource set and the second CG PUSCH resource set, and the uplink transmission spatial filters for the CG PUSCHs in the first CG PUSCH resource set and the second CG PUSCH resource set can be individually determined based on the different TCI states. That is, the DMRS of the CG PUSCHs in the first CG PUSCH resource set and the second CG PUSCH resource set can be QCLed with reference to the different TCI states.

Here, for example, according to the Embodiment 7, the first CG PUSCH resource set and the second CG PUSCH resource set may be associated with a single CG configuration. In this case, the same HARQ process identifier (ID) may be determined for the first CG PUSCH resource set and the second CG PUSCH resource set within the same CG PUSCH transmission period.

In addition, for example, according to the Embodiment 8, the first CG PUSCH resource set and the second CG PUSCH resource set may be associated with the first CG configuration and the second CG configuration, respectively. In this case, the CG PUSCH transmission periods for the first CG configuration and the second CG configuration may be aligned.

General Device to which the Present Disclosure may be applied

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs (Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, respective configuration information related to one or more configured grant (CG) configurations; and

   transmitting, to the base station, the same transport block (TB) through transmission of CG PUSCHs (physical uplink shared channel) in a first CG PUSCH resource set and a second CG PUSCH resource set for the one or more CG configurations,

   wherein different transmission configuration indication (TCI) states are configured for the first CG PUSCH resource set and the second CG PUSCH resource set, and

   wherein uplink transmission spatial filters for the CG PUSCHs in the first CG PUSCH resource set and the second CG PUSCH resource set are individually determined based on the different TCI states.

2. The method of claim 1, wherein the first CG PUSCH resource set and the second CG PUSCH resource set are associated with a single CG configuration.

3. The method of claim 2, wherein the same hybrid automatic repeat request (HARQ) process identifier (ID) is determined for the first CG PUSCH resource set and the second CG PUSCH resource set within the same CG PUSCH transmission period.

4. The method of claim 1, wherein the first CG PUSCH resource set and the second CG PUSCH resource set are associated with a first CG configuration and a second CG configuration, respectively.

5. The method of claim 4, wherein CG PUSCH transmission periods for the first CG configuration and the second CG configuration are aligned.

6. The method of claim 5, further comprising:
   receiving a single MAC (medium access control) control element (CE) for activating and/or deactivating TCI states for the first CG PUSCH resource set and the second CG PUSCH resource set.

7. The method of claim 6, wherein the TCI states indicated by the MAC CE is activated and/or deactivated from the first CG PUSCH transmission period after a time of receiving the MAC CE or a time of transmitting an ACK (acknowledgement) for the MAC CE.

8. A user equipment (UE) operating in a wireless communication system, the UE comprising:

   at least one transceiver for transmitting and receiving a wireless signal; and
   at least one processor for controlling the at least one transceiver,
   wherein the at least one processor configured to:

   receive, from a base station, respective configuration information related to one or more configured grant (CG) configurations; and
   transmit, to the base station, the same transport block (TB) through transmission of CG PUSCHs (physical uplink shared channel) in a first CG PUSCH resource set and a second CG PUSCH resource set for the one or more CG configurations,
   wherein different transmission configuration indication (TCI) states are configured for the first CG PUSCH resource set and the second CG PUSCH resource set, and
   wherein uplink transmission spatial filters for the CG PUSCHs in the first CG PUSCH resource set and the second CG PUSCH resource set are individually determined based on the different TCI states.

9. At least one non-transitory computer-readable medium storing at least one instruction, wherein the at least one instruction executable by at least one processor controls a user equipment (UE) to:

   receive, from a base station, respective configuration information related to one or more configured grant (CG) configurations; and
   transmit, to the base station, the same transport block (TB) through transmission of CG PUSCHs (physical uplink shared channel) in a first CG PUSCH resource set and a second CG PUSCH resource set for the one or more CG configurations,

wherein different transmission configuration indication (TCI) states are configured for the first CG PUSCH resource set and the second CG PUSCH resource set, and

wherein uplink transmission spatial filters for the CG PUSCHs in the first CG PUSCH resource set and the second CG PUSCH resource set are individually determined based on the different TCI states.

10. A processing apparatus configured to control a user equipment (UE) in a wireless communication system, the processing apparatus comprising:

at least one processor; and

at least one computer memory operably connected to the at least one processor and storing instructions that, based on being executed by the at least one processor, perform operations comprising:

receiving, from a base station, respective configuration information related to one or more configured grant (CG) configurations; and

transmitting, to the base station, the same transport block (TB) through transmission of CG PUSCHs (physical uplink shared channel) in a first CG PUSCH resource set and a second CG PUSCH resource set for the one or more CG configurations,

wherein different transmission configuration indication (TCI) states are configured for the first CG PUSCH resource set and the second CG PUSCH resource set, and

wherein uplink transmission spatial filters for the CG PUSCHs in the first CG PUSCH resource set and the second CG PUSCH resource set are individually determined based on the different TCI states.

11. A method performed by a base station in a wireless communication system, the method comprising:

transmitting, to a user equipment (UE), respective configuration information related to one or more configured grant (CG) configurations; and

receiving, from the UE, the same transport block (TB) through transmission of CG PUSCHs (physical uplink shared channel) in a first CG PUSCH resource set and a second CG PUSCH resource set for the one or more CG configurations,

wherein different transmission configuration indication (TCI) states are configured for the first CG PUSCH resource set and the second CG PUSCH resource set, and

wherein uplink transmission spatial filters for the CG PUSCHs in the first CG PUSCH resource set and the second CG PUSCH resource set are individually determined based on the different TCI states.

12. 13. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), respective configuration information related to one or more configured grant (CG) configurations; and

receive, from the UE, the same transport block (TB) through transmission of CG PUSCHs (physical uplink shared channel) in a first CG PUSCH resource set and a second CG PUSCH resource set for the one or more CG configurations,

wherein different transmission configuration indication (TCI) states are configured for the first CG PUSCH resource set and the second CG PUSCH resource set, and

wherein uplink transmission spatial filters for the CG PUSCHs in the first CG PUSCH resource set and the second CG PUSCH resource set are individually determined based on the different TCI states.

# FIG.1

FIG.2

Radio Frame 10ms

Fixed Size

Subframe 1ms

| 0 | 1 | 2 | 3 | 4 | 5 | 6 | 7 | 8 | 9 |
|---|---|---|---|---|---|---|---|---|---|

Subframe ={1,2,4} Slots

Slot

| 0 | 1 | 2 | 3 |
|---|---|---|---|

Slot={7,14} Symbols

Symbol

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Size depends
on subcarrier
spacing

Mini-Slot
(URLLC)

Mini-Slot={2,4,7} Symbols

# FIG.3

## FIG.4

Freq.

1ms subframe:
14 symbols/slot

12 × 15 KHz

12 × 30 KHz

PRB

12 × 60 KHz

Time

# FIG.5

Resource grid

1 RE

1 subcarrier

1 Symbol

A carrier
(up to 3300 subcarriers, i.e., 275 RBs)

A BWP

1 RB=12 subcarrier

l=0 ·····

k=0

## FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

# FIG.7

TRP 1                    TRP 2

Layer group #1          Layer group #2
for CW #1               for CW #1

UE1

(a)

TRP 1                    TRP 2

Layer group #1          Layer group #2
for CW #1               for CW #2

UE1

(b)

# FIG.8

I-frame

P-frame

GOP

Time

# FIG.9

DL

DCI

DCI activates CG
CG PUSCH 1
& PUSCH 2

CG1 perioid = (16 or 17ms) X N

CG2 perioid = 16 or 17ms

UL

PUSCH1 TB1 | PUSCH1 TB2 | PUSCH2 TB2 | PUSCH2 TB | PUSCH2 TB | ...... | PUSCH1 TB1 | PUSCH1 TB2 | PUSCH2 TB2

TB1 & TB2 for I-frame    TB for P-frame    TB for P-frame    TB1 & TB2 for I-frame

Time

EP 4 518 510 A1

## FIG.10

Network                                                              UE

Configuration information                                    S1001

Downlink control information                                 S1002

Configured grant PUSCH
transmission                                                 S1003

## FIG.11

Receive respective configuration
information related to one or more  ~S1101
configured grant configurations

Receive downlink control
information                        ~S1102

Transmit configured grant PUSCH    ~S1103

## FIG.12

Transmit respective configuration
information related to one or more  ~S1201
configured grant configurations

Transmit downlink control
information                        ~S1202

Receive configured grant PUSCH     ~S1203

# FIG. 13

## INTERNATIONAL SEARCH REPORT

| International application No. |
|---|
| **PCT/KR2023/005740** |

**A.    CLASSIFICATION OF SUBJECT MATTER**

**H04W 72/12**(2009.01)i; **H04W 72/231**(2023.01)i; **H04L 1/18**(2006.01)i

According to International Patent Classification (IPC) or to both national classification and IPC

**B.    FIELDS SEARCHED**

Minimum documentation searched (classification system followed by classification symbols)

H04W 72/12(2009.01); H04W 72/02(2009.01); H04W 72/04(2009.01); H04W 72/14(2009.01); H04W 74/00(2009.01); H04W 76/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: configured grant(CG) configuration, CG PUSCH resource set, 전송 설정 지시(TCI), 상태(state), 상향링크 전송 공간 필터(UL TX spatial filter), TB, HARQ process ID, MAC-CE, activation, deactivation, ACK

**C.    DOCUMENTS CONSIDERED TO BE RELEVANT**

| Category* | Citation of document, with indication, where appropriate, of the relevant passages | Relevant to claim No. |
|---|---|---|
| Y | WO 2021-253207 A1 (QUALCOMM INCORPORATED) 23 December 2021 (2021-12-23)<br>See paragraphs [0076]-[0089]; and claims 1 and 5. | 1-12 |
| DY | 3GPP; TSG RAN; NR; Physical layer procedures for data (Release 17). 3GPP TS 38.214 V17.1.0. 08 April 2022.<br>See section 6.1. | 1-12 |
| Y | US 2022-0124861 A1 (GUANGDONG OPPO MOBILE TELECOMMUNICATIONS CORP., LTD.) 21 April 2022 (2022-04-21)<br>See paragraphs [0101]-[0144]; and claim 1. | 6-7 |
| A | US 2021-0243795 A1 (NOKIA TECHNOLOGIES OY) 05 August 2021 (2021-08-05)<br>See paragraphs [0036]-[0103]; and claims 1-5. | 1-12 |
| A | US 2021-0051701 A1 (QUALCOMM INCORPORATED) 18 February 2021 (2021-02-18)<br>See paragraphs [0096]-[0099]; and claim 1. | 1-12 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 August 2023** | **24 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005740**

| Patent document cited in search report | | | Publication date (day/month/year) | Patent family member(s) | | | Publication date (day/month/year) |
|---|---|---|---|---|---|---|---|
| WO | 2021-253207 | A1 | 23 December 2021 | None | | | |
| US | 2022-0124861 | A1 | 21 April 2022 | CN | 113647168 | A | 12 November 2021 |
| | | | | CN | 114071759 | A | 18 February 2022 |
| | | | | EP | 3958630 | A1 | 23 February 2022 |
| | | | | EP | 3958630 | A4 | 27 July 2022 |
| | | | | WO | 2021-120012 | A1 | 24 June 2021 |
| US | 2021-0243795 | A1 | 05 August 2021 | AR | 121154 | A1 | 20 April 2022 |
| | | | | CN | 113271184 | A | 17 August 2021 |
| | | | | EP | 3860289 | A1 | 04 August 2021 |
| | | | | TW | 202133669 | A | 01 September 2021 |
| | | | | TW | I777392 | B | 11 September 2022 |
| | | | | WO | 2021-152207 | A1 | 05 August 2021 |
| US | 2021-0051701 | A1 | 18 February 2021 | CN | 114208366 | A | 18 March 2022 |
| | | | | EP | 4014644 | A1 | 22 June 2022 |
| | | | | US | 11540310 | B2 | 27 December 2022 |
| | | | | WO | 2021-030144 | A1 | 18 February 2021 |

Form PCT/ISA/210 (patent family annex) (July 2022)